Europäisches Patentamt

European Patent Office

Office européen des brevets

(19)

(11) **EP 1 406 410 A1**

(12) # EUROPEAN PATENT APPLICATION
published in accordance with Art. 158(3) EPC

(43) Date of publication:
**07.04.2004 Bulletin 2004/15**

(21) Application number: **01976944.7**

(22) Date of filing: **05.07.2001**

(51) Int Cl.[7]: **H04L 9/32**, G06F 12/14

(86) International application number:
**PCT/RU2001/000272**

(87) International publication number:
**WO 2003/005638 (16.01.2003 Gazette 2003/03)**

(84) Designated Contracting States:
**AT BE CH CY DE DK ES FI FR GB GR IE IT LI LU MC NL PT SE TR**
Designated Extension States:
**AL LT LV MK RO SI**

(71) Applicants:
- **Nasypny, Vladimir Vladimirovich**
  **Moscow, 115573 (RU)**
- **Gurov, Georgy Borisovich**
  **Moscow, 125581 (RU)**
- **Lobanov, Gennady Kharitonovich**
  **Moscow, 121059 (RU)**
- **Nazarov, Vladimir Vasilievich**
  **Moskovskaya obl., 141000 (RU)**
- **Shishov, Alexandr Borisovich**
  **Moscow, 107589 (RU)**

(72) Inventors:
- **Nasypny, Vladimir Vladimirovich**
  **Moscow, 115573 (RU)**
- **Gurov, Georgy Borisovich**
  **Moscow, 125581 (RU)**
- **Lobanov, Gennady Kharitonovich**
  **Moscow, 121059 (RU)**
- **Nazarov, Vladimir Vasilievich**
  **Moskovskaya obl., 141000 (RU)**
- **Shishov, Alexandr Borisovich**
  **Moscow, 107589 (RU)**

(74) Representative: **Finnie, Peter John**
**Gill Jennings & Every,**
**Broadgate House,**
**7 Eldon Street**
**London EC2M 7LH (GB)**

(54) **METHOD FOR AN INTEGRATED PROTECTION SYSTEM OF DATA DISTRIBUTED PROCESSING IN COMPUTER NETWORKS AND SYSTEM FOR CARRYING OUT SAID METHOD**

(57)    The invention relates to means for protecting information systems against non-authorized intrusion. The invention makes it possible to form a unified loop for protecting the distributed data processing. To access a computer system from a user device and from a server for the distributed data processing, a system of internal and external keys based on secret keys received from a center for certification, generation and distribution of keys is formed. Secret internal single-use keys for a symmetrical encryption mode used for data transmission, storage and processing are generated, and a connection request to a pre-selected server is sent from the user device to the certification center. Public keys, by which the external single-use keys for symmetrical encryption mode are generated, are received. For transmission to the server, the information transmitted is encrypted using stochastic coding involving the use of external single-use keys. The information is also encrypted using secret internal single-use symmetric keys, processed, stochastically coded and sent to the user device.

EP 1 406 410 A1

## Description

Field of the Invention

The invention relates to a field of computer networks, information systems and security means against unauthorized access.

Background of the Invention

For efficient functioning of information systems based on the up-to-date computer technology and provided for processing and transmission of confidential data (e.g. e-mail, modem payment systems, search engines), an ensured security for distributed data processing must be provided. The most secure type of the distributed processing now is e-mail. Several methods for secure e-mail are disclosed in WO/0049766, WO/9817042, WO/0001108. Such security methods provide confidentiality of information transmission, electronic-digital signature, identification and authentication of information senders and recipients. WO/0001108 discloses a method for providing confidentiality of an address portion of messages by introducing anonymous and quasi-anonymous user identifiers. Said identifiers include name, address, financial data, and are introduced via a proxy. In this way authentic and anonymous user identifiers are certified. But such system is not sufficiently reliable, because, first, it is not cryptographically secure, and, second, there are transmission ranges between a user and the proxy, where an authentic (true) identifier is transmitted in a public mode and can be intercepted by an unauthorized person to hack the entire anonymous identification system.

The main drawback of the mentioned methods consists in that the processing of the address portion of messages is carried out in network servers in the public mode, using non-secure programs of e-mail, i.e. it is carried out in source instruction and data codes. This renders both the processed address information and e-mail programs vulnerable to informational adverse effects. As a result, virus infection of programs, distortions of their operating algorithm or the message address portion, as well as unauthorized message address substitution (or alteration) may occur.

The problem of secure information processing is also actual in other systems of distributed information processing, e.g. in electronic payment systems with remote access to databases for retrieving messages on user's query, information-search systems, where arithmetic computations and information processing are carried out in the public mode. Therefore, one of the most actual tasks of providing security for such systems is protection against unauthorized access, as well as other informational adverse actions (viruses, software mines) that affect message processing and execution of programs in computers (user devices and network servers).

RU 2137185 discloses a method for comprehensive information processing in computers against unauthorized access, software mines and viruses providing a possibility to process programs and data in a computer in a stochastically encoded, secure mode, with changing the instruction codes, data and algorithm in the course of operating the programs. This method implements two levels of security: a logical level based on stochastic transformation of a program algorithm (managing structure), and a physical level implemented by stochastic encoding of computer instructions. Due to said transformation any program mines and viruses are not able to find a point to enter the program and affect the same. The known method allows secure processing of numeric information during arithmetic computations. However, said method does not provide an integrated protection system of the whole chain of distributed information processing, including transmission via communication channels. This is caused, by using existing cryptographic security means for data transmission, by decryption of information in interfaces connecting secure links to a computer, consequently, information processing before stochastic encoding will be carried out in the public mode. A "window" formed in this way disrupts the single chain of the secure distributed information processing and becomes a possible cause of "leakage" by an unauthorized access thereto, including the access using incidental electromagnetic radiations.

Disclosure of the Invention

An object of the invention is to provide a method and system of an integrated protection of distributed information processing, ensuring formation of a complete chain of secure distributed information processing, an integrated ensured protection of distributed information processing against unauthorized access, and an increased transmission rate of encoded messages.

According to one aspect of the invention, there is provided a method for integrated protection of distributed data processing in a computer system including at least one user device, at least one distributed data processing server and a center for certification, generation and distribution of keys, comprising steps of providing access to the computer system at each user device and distributed data processing server, and generating a system of internal and external keys based on secret key tables, received from the center for certification, generation and distribution of keys; generating, in the user device and the distributed data processing server, based on the mentioned secret key tables, secret internal single-use keys for symmetric encryption when transmitting, storing and processing data in the encrypted form in an environment of the user device and the distributed data processing server; encrypting data entered and transmitted in the environment of the user device and the distributed data processing server, which data to be processed are stochastic encoded using the mentioned secret internal single-use keys; sending, from the user device to the center for certification, generation and distribution of keys, a request for establishing a connection to a selected distributed data processing server to perform a specified processing function; receiving from the center for certification, generation and distribution of keys or generating in the user device and distributed data processing server, public keys for updating the secret key tables to perform the stochastic encoding of data transmitted from the user device to the distributed data processing server, and processing the transformed data and outputting the result from the server to the user device; generating in the user device and the distributed data processing server, based on the public keys and the secret key tables, secret external single-use keys for symmetric encryption, and modifying the secret key tables when transmitting data and processing it in the encrypted form; encrypting the data to be transmitted by stochastic encoding in the user device using the secret external symmetric single-use keys; transmitting the stochastic encoded data to the distributed data processing server; receiving the stochastically encoded data in the distributed data processing server, processing the received data in the encrypted form after an additional encryption using the secret internal single-use symmetric keys according to a processing type as defined by the data format, and stochastically encoding the additionally encrypted data using the secret external symmetric single-use keys; transmitting the stochastically encoded encrypted data to the user device; receiving the stochastically encoded encrypted data in the user device and decoding the received data for outputting the data to the user in the public form.

Access to the computer system and generation of the internal and external keys are preferably performed by entering into the user device a data medium with recorded PIN-code, password, a value of password hash function, an initial key table and data of secret permutations of columns and rows to obtain a secret basic key table and a secret external key table, wherein the system of internal and external keys is generated as a set of secret basic and external key tables generated by secret permutations of columns and rows of the initial key table.

It is preferred, that the method further comprises generating, in the center for certification, generation and distribution of keys, the user device and the distributed data processing server, public keys in the form of tables of relative permutations by logical conclusion on a set of tables of secret permutations, using transitive relations between row elements, for the user device and the distributed data processing server, to render symmetric their secret external key tables and modify the secret key tables, wherein the secret external key tables of the user device and distributed data processing server are rendered symmetric, the secret key tables for distributed processing of the encrypted information are modified by permutations and substitutions of columns and rows of said secret key tables by using public keys, and said single-use keys are generated by stochastically changing random elements of symmetric external and internal key tables for each transmitted stochastic encoded data.

It is also preferred, that the method further comprises processing the encrypted data by executing predetermined programs, in a secure stochastically transformed form, in a datalogical secure computing device using a secure arithmetic processor; matching, via data buses, an interface of said processor with the secret internal key table; and sending, via control buses, instructions from the datalogical secure computing device.

It is also preferred, that the method further comprises generating a value of a hash function of the transmitted data, providing and transmitting the data sender's electronic digital signature, verifying the sender's authenticity and checking the received data integrity, wherein the value a of hash function of the transmitted data is generated as a random pattern of a predetermined length by adding stochastically encoded data blocks in a secure arithmetic processor at the user device and the distributed data processing server.

According to another aspect of the present invention, there is provided a system for protection of distributed data processing, comprising a center for certification, generation and distribution of keys; at least one user device; and at least one distributed data processing server; wherein the center for certification, generation and distribution of keys comprises a user certifying subsystem, a secret key table generating subsystem, a datalogical secure computing system, a subsystem for providing data media for certified users, a public key generating subsystem, an authentication and data integrity checking subsystem, a secure arithmetic processor, a key distributing subsystem and a secure processing control unit; each user device comprises a secret key table generating subsystem, an internal stochastic decoder, an internal stochastic encoder, a secure access subsystem, a secure arithmetic processor, a datalogical secure computing system, a secure processing control unit and a stochastic transformation transceiving unit; the distributed data processing server comprises a secret key table generating subsystem, a stochastic transformation transceiving unit, an internal stochastic re-encoding device, a secure processing control unit, a secure access subsystem, a secure arithmetic processor, a datalogical secure computing system and a secure database; in the center for certification, generation and distribution of keys: the datalogical secure computing system is connected to the user certifying subsystem, the secret key table generating subsystem, to which the user certifying subsystem is connected, and also to the secure arithmetic processor, the public key generating subsystem, the subsystem for providing data media for certified users and to the key distributing subsystem, in turn connected to the secure processing control unit, in turn connected to the authentication and data integrity checking subsystem; in the user device: the datalogical secure computing system is connected to the secure arithmetic processor, the internal stochastic encoder, the internal stochastic decoder and the stochastic transformation transceiving unit; the secure access subsystem is connected to the secure processing control unit, in turn connected to the internal stochastic encoder, the internal stochastic decoder, the stochastic transformation transceiving unit, the secret key table generating subsystem and the datalogical secure computing system; in the distributed data processing server: the datalogical secure computing system is connected to the secure arithmetic processor, the secure database, the internal stochastic re-encoding device and the secure processing control unit, in turn connected to the stochastic transformation transceiving unit, the internal stochastic re-encoding device, the secret key table generating subsystem and the secure access subsystem; wherein the key distributing subsystem of the center for certification, generation and distribution of keys is connected, respectively, to the secret key table generating subsystem of the user device and the distributed data processing server.

The secure access subsystem of the user device preferably comprises a subsystem for entering data from a data medium, which subsystem is connected to the authentication and data integrity checking subsystem, which is connected to the secure processing control unit of the user device.

The stochastic transformation transceiving unit of the user device preferably comprises the first and second devices for stochastic re-encoding, wherein the first stochastic re-encoding device is included into a data transmission path from the distributed data processing server to the datalogical secure computing system of the user device, and the second stochastic re-encoding device is included into a data reception path from the datalogical secure computing system of the used device to the distributed data processing server.

The stochastic transformation transceiving unit of the distributed data processing server preferably comprises the first and second stochastic re-encoding devices, wherein the first stochastic re-encoding device is included into a data transmission path from the secure processing control unit of the distributed data processing server to the stochastic transformation transceiving unit of the user device, and the second stochastic transformation device is included into a data reception path from the stochastic transformation transceiving unit of the user device.

According to yet another aspect of the present invention, there is provided a public key generating subsystem for a system for protection of distributed data processing, comprising a memory for storing tables of secret column and row permutations in a secret key table; a memory for storing a table of symmetric column and row permutations in an internal key table; a register of a transitive relation sequence between rows of said tables of secret permutations; a unit logical conclusion on the transitive relation sequence; a memory for storing a table of relative non-secret column and row permutations in a external key table; a public key register; an input switching unit for initial data inputting; an output switching unit for public key outputting; and a control unit; wherein outputs of the control unit are connected to inputs of the memory for storing tables of secret column and row permutations in secret key tables, the memory for storing the table of symmetric column and row permutations of the internal key table, the register of the transitive relation sequence between rows of said tables of secret permutations, the public key register, the input and output switching units, and the unit of logical conclusion on the transitive relation sequence, which unit of logical conclusion in turn is connected by its second and third inputs, respectively, to outputs of the memory for storing the table of symmetric column and row permutations of the external key table, and to outputs of the register of the transitive relation sequence between rows of said tables of secret permutations, and connected by its output to an input of the memory for storing the table of relative non-secret column and row permutations in the external key table, which memory is connected by its output to an input of the public key register, in turn connected by its output to an input of the output switching unit, in turn connected by another input to outputs of the memory for storing tables of secret column and row permutations of secret key tables, which memory is connected by its input to an output of the input switching unit; the second outputs of the input and output switching units are connected to an input of the control unit.

According to yet another aspect of the present invention, there is provided a stochastic encoder for a system for protection of distributed data processing, comprising an input permutation register for inputting data to be encoded; a bank of registers of the multi-alphabet encoder columns, which bank is connected by its first input to an output of the input permutation register; a column-connecting circuit connected by its outputs to the second inputs of said bank of registers; a cyclic permutation register connected by its outputs to corresponding inputs of the column-connecting circuit; a bank of keys-invertors connected by its outputs to the corresponding inputs of the cyclic permutation register; a recurrent register connected by its outputs to the corresponding inputs of the bank of keys-inverters; a gamma-generating circuit; a mod 2 adder connected by its inputs, respectively, to outputs of said bank of registers and outputs of the gamma-generating circuit, and connected by its output to an input of a code block output register for outputting encoded data; and a control unit connected by its outputs to inputs, respectively, of the input permutation register, the bank of registers of the multi-alphabet encoder columns, the column-connecting circuit, the cyclic permutation register, the bank of keys-inverters, the recurrent register, the gamma-generating circuit, the mod 2 adder, and the code block output register; the control unit is connected by its input to an additional output of the recurrent register and has an additional input and output for connection with other control units of the system for protection of distributed data processing.

The gamma-generating circuit preferably comprises a bank of registers of the gamma-generating table columns; a column-connecting circuit connected by its outputs to inputs of said bank of registers; a cyclic permutation register connected by its outputs to corresponding inputs of the column-connecting circuit; a bank of keys-inverters, which bank is connected by its outputs to the corresponding inputs of the cyclic permutation register; a recurrent register connected by its outputs to corresponding inputs of the bank of keys-inverters; an initial gamma register; a mod 2 adder; a key connected by its input to an output of said bank of registers, and connected by its first and second outputs, respectively, to an input of said mod 2 adder, and to an input of the mod 2 adder of the stochastic encoder; and a control unit connected by its outputs to inputs, respectively, of the recurrent register, the bank of keys-inverters, the cyclic permutation register, the column-connecting circuit, said bank of registers, the key, said mod 2 adder, the gamma-generating circuit, and the initial gamma register, which is connected by its output to the ;input of said control unit in turn connected by its second input to an additional output of the recurrent register and by its third input to a corresponding output of the control unit of the stochastic encoder.

According to yet another aspect of the present invention, there is provided a stochastic re-encoding device for a system for protection of distributed data processing, comprising an input code block register; a first stochastic transformation stage connected by its input to an output of the input code block register; a first permutation register connected by its first and second inputs, respectively, to the first and second outputs of the first stochastic transformation stage; a second permutation register connected by its first inputs, respectively, to outputs of the first permutation register; a second stochastic transformation stage connected by its input to an output of the second permutation register, and connected by its first output to a second input of the second permutation register; and an output code block register connected by its input to a second output of the second stochastic transformation stage; wherein each of said stochastic transformation stages comprises a bank of registers of the multi-alphabet encoder columns, wherein a first input of said bank of registers is an input of the corresponding stochastic transformation stage; a column-connecting circuit connected by its outputs to second inputs of said bank of registers; a cyclic permutation register connected by its outputs to corresponding inputs of the column-connecting circuit; a bank of keys-inverters connected by its outputs to corresponding inputs of the cyclic permutation register; a recurrent register connected by its outputs to corresponding inputs of the bank of keys-inverters; a gamma-generating circuit; a mod 2 adder connected by its first input, via a key, to an output of said bank of registers, and connected by its second input to an output of the gamma-generating circuit, wherein a second output of said key is the second output of the corresponding stochastic transformation stage, a control unit wherein a first output is the first output of the corresponding stochastic transformation stage, and the other outputs are connected, respectively, to inputs of said bank of registers, the column-connecting circuit, the cyclic permutation register, the bank of keys-inverters, the recurrent register in turn connected by an additional output to the corresponding input, respectively, of the control unit, the gamma-generating circuit, the mod 2 adder and the key; the control unit has additional input and output for connection with other control units of the system for protection of distributed data processing.

Brief Description of the Drawings

The various aspects, features and advantages of the present invention will become more fully understood upon consideration of the following detailed description of the invention with the accompanying drawings, wherein:

Fig.1 shows a generalized functional block diagram of a system for integrated protection of distributed data processing in a computer system corresponding to an exemplary embodiment of the present invention;

Fig.2 — a functional block diagram of a center for certification, generation and distribution of keys (CCGDK) corresponding to the exemplary embodiment of the present invention;

Fig.3 — a functional block diagram of a user device corresponding to the exemplary embodiment of the present invention;

Fig.4 — a functional block diagram of a distributed data processing server corresponding to the exemplary embodiment of the present invention;

Fig.5 — a functional block diagram of a secret key table generating subsystem of CCGDK according to Fig.2;

Fig.6 — a functional block diagram of a secret key table generating subsystem of the user device according to Fig 3 and the distributed data processing server according to Fig4;

Fig.7 - a functional block diagram of a public key generating subsystem of CCGDK according to Fig. 2;

Fig.8 — a functional block diagram of an authentication and data integrity checking subsystem of CCGDK according to Fig.2,

Fig.9 — a functional block diagram of a stochastic encoder of the user device;

Fig. 10 - a functional block diagram of gamma-generating circuit of the stochastic encoder according to Fig.9;

Figs.11A, 11B - a functional block diagram of an internal stochastic re-encoding device of the distributed data processing servers;

Fig.12 - tables used CCGDK;

Fig.13 — a schematic illustration of a process of generating public keys for users in CCGDK;

Fig.14 - a schematic illustration of a key distributing procedure.

Preferred Embodiments of the Invention

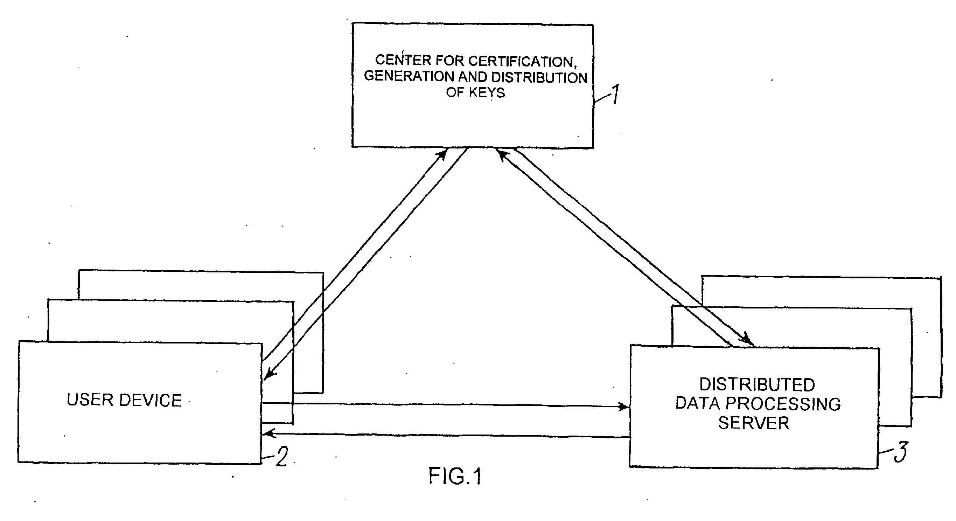

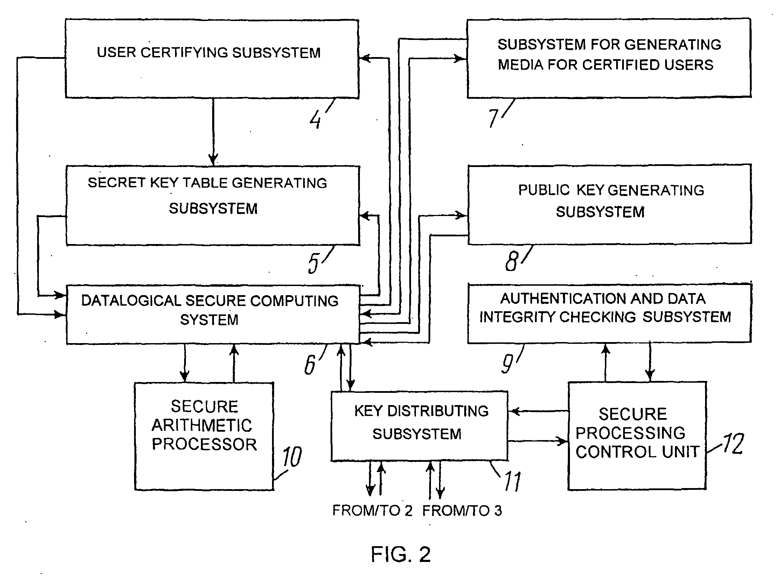

In Fig.1, system for integrated protection of distributed data processing corresponding to an exemplary embodiment of the present invention comprises: a center for certification, generation and distribution of keys (CCGDK); at least one user device 2 and at least one distributed data processing server 3. CCGDK 1 (Fig.2) comprises a user certifying subsystem 4, a secret key table generating subsystem 5, a datalogical secure computing system 6, a subsystem 7 for generating media for certified users, a public key generating subsystem 8, an authentication and data integrity checking subsystem 9, a secure arithmetic processor 10, a key distributing subsystem 11, and secure processing control unit 12.

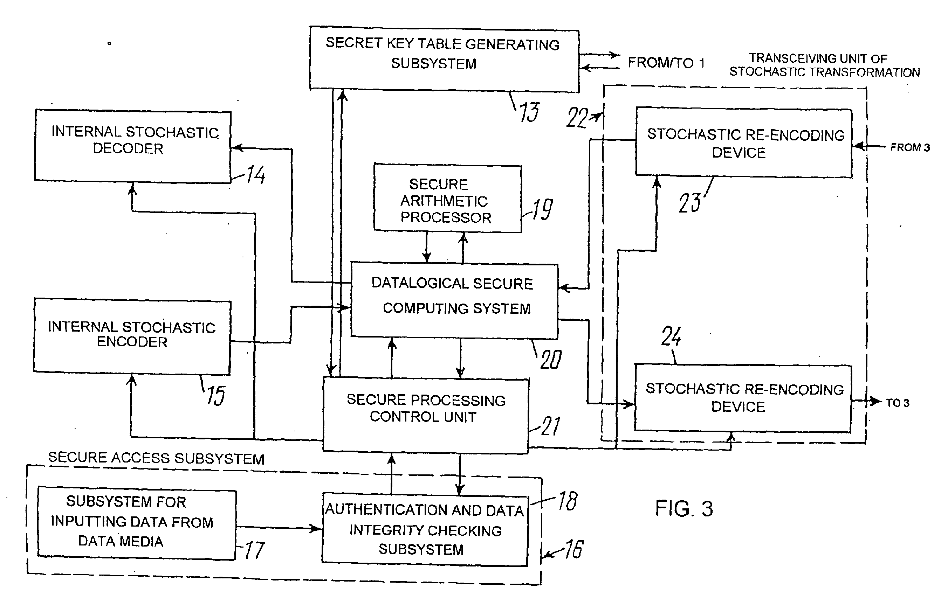

Each user device 2 (Fig.3) comprises a secret key table generating subsystem 13, an internal stochastic decoder 14, an internal stochastic encoder 15, a secure access subsystem 16 that includes a subsystem 17 for inputting data from data media and an authentication and data integrity checking subsystem 18, a secure arithmetic processor 19, a datalogical secure computing system 20, a secure processing control unit 21 and a stochastic transformation transceiving unit 22 that comprises first and second stochastic data re-encoding devices 23, 24.

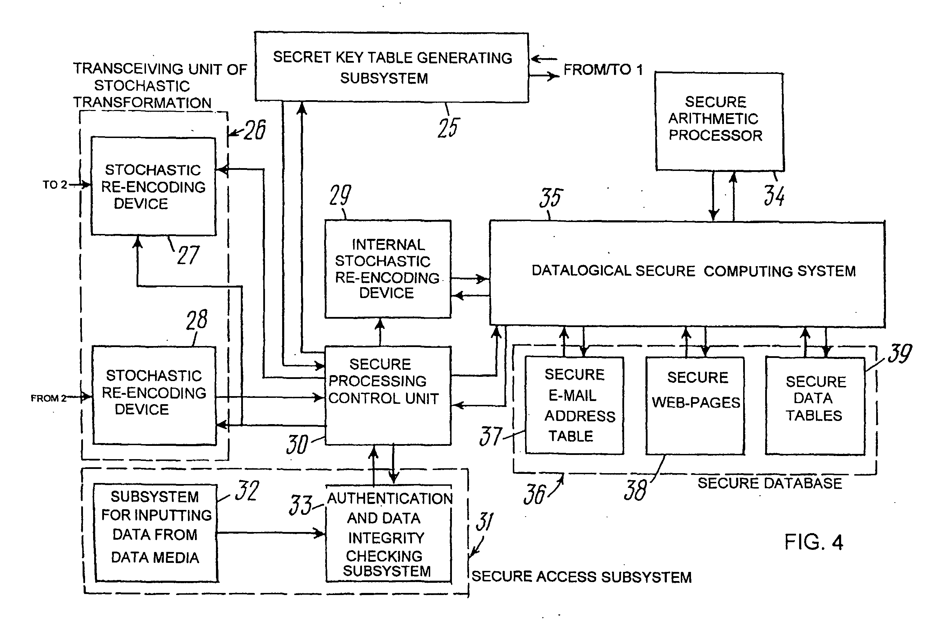

The distributed data processing server (Fig.4) comprises: a secret key table generating subsystem 25, a stochastic transformation transceiving unit 26 that includes first and second stochastic data re-encoding devices 27, 28, an internal stochastic re-encoding device 29, a secure processing control unit 30, a secure access subsystem 31 that includes a subsystem 32 for inputting data from a data medium and an authentication and data integrity checking subsystem 33, a secure arithmetic processor 34, a datalogical secure computing system 35 and a secure database 36 including a secure e-mail address table 37, secure web-pages 38 and secure data tables 39.

In CCGDK 1 (Fig.2) the datalogical secure computing system 6 is connected to the user certifying subsystem 4, which in turn is connected to the secret key table generating subsystem 5, the secure arithmetic processor 10, the secret key table generating subsystem 5, the public key generating subsystem 8, the subsystem 7 for providing data media for certified users and the key distributing subsystem 11 being connected to the secure processing control unit 12 that in turn is connected to the authentication and data integrity checking subsystem 9.

In the user device 2 (Fig.3), the datalogical secure computing system 20 is connected to the secure arithmetic processor 19, the internal stochastic encoder 15, the internal stochastic decoder 14, the first and second stochastic data re-encoding devices 23, 24, and the secure processing control unit 21, which in turn is connected to the internal stochastic encoder 15, the internal stochastic decoder 14, first and second stochastic data re-encoding devices 23, 24, the secret key table generating subsystem 13 and the authentication and data integrity checking subsystem 18 being connected to the subsystem 17 for inputting information from the data medium.

In the distributed data processing server (Fig. 4), the datalogical secure computing system 35 is connected to the secure arithmetic processor 34, the secure database 36 including the secure e-mail address table 37, the secure web-pages 38 and the secure data tables 39. Besides, said server is connected to the secure processing control unit 30 being connected to the first and second stochastic data re-encoding devices 27, 28, the internal stochastic data re-encoding device 29, the secret key table generating subsystem 25 and the secure access subsystem 31 including the authentication and data integrity checking subsystem 33 being connected to the subsystem 32 of inputting data from the data medium. The key distributing subsystem 11 of CCGDK is connected, respectively, to the secret key table generating subsystems 25 and 13 of the distributed data processing center 3 and user device 2. The first and second stochastic data re-encoding devices 27, 28 of the distributed data processing server 3 are connected, respectively, to the first and second stochastic data re-encoding 23, 24 devices of the user device 2.

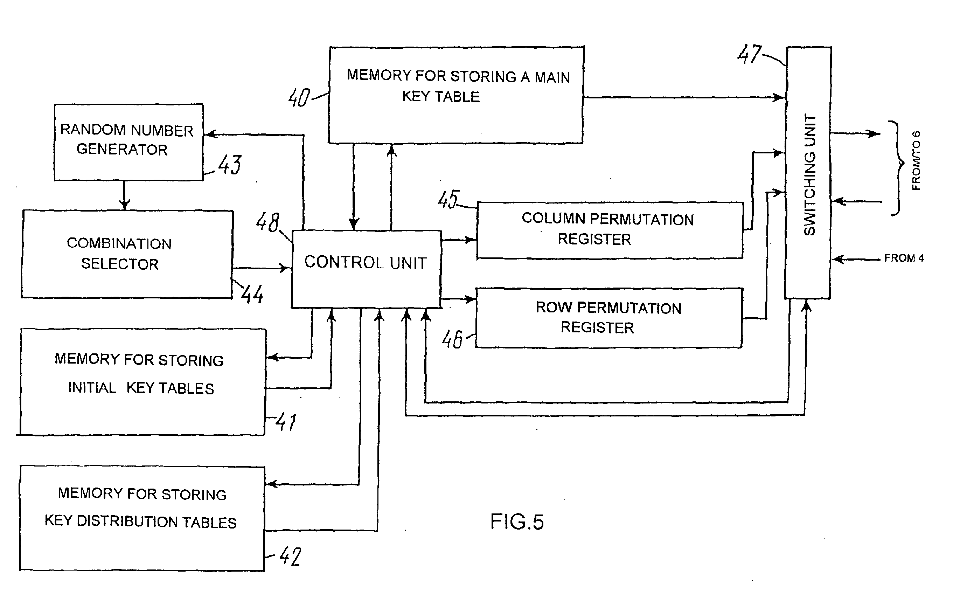

Fig.5 shows the secret key table generating subsystem 5 of CCGDK 1, which subsystem comprises a memory 40 for storing a main key table, a memory 41 for storing initial key tables, a memory 42 for storing key distribution tables, a random number generator 43 with a combination selector 44, a column permutation register 45, a row permutation register 46, switching unit 47 connected to outputs of said memory 40 and outputs of registers 45, 46. Additionally, the subsystem 5 comprises control unit 48 connected to said components 40-47.

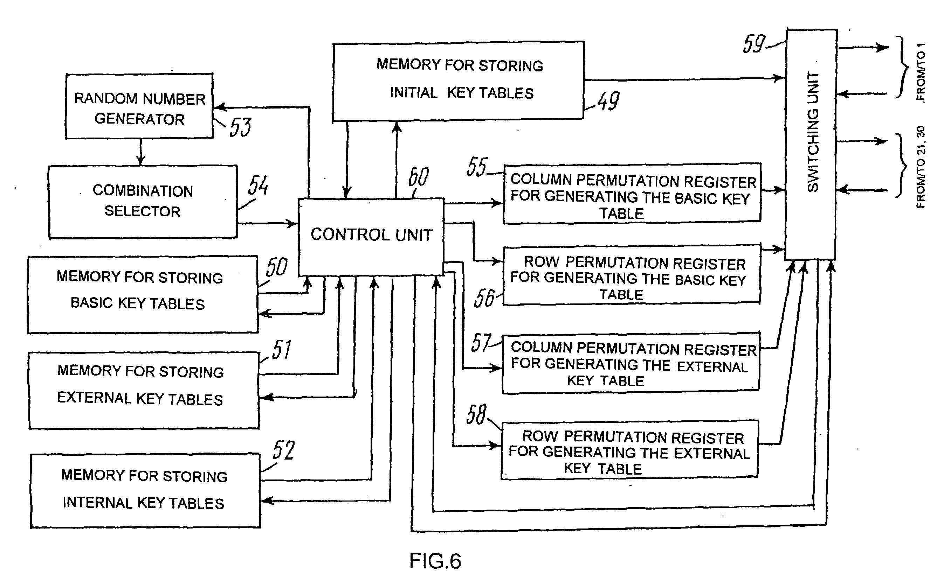

Fig.6 shows the secret key table generating subsystem 13, 25, which subsystem is contained in the distributed data processing server 3 and the user device 2. Subsystem 13, 25 comprises memory 49, 50, 51, 52 for storing, respectively, initial, basic, external and internal key tables, a random number generator 53 with a combination selector 54, column and row permutation registers 55, 56, 57, 58 of, respectively, basic and external keys, a switching unit 59 connected to outputs of said memory 49 and those of said registers 55, 56, 57, 58. Besides, the subsystem 13 comprises a control unit 60 connected to said components 49-59.

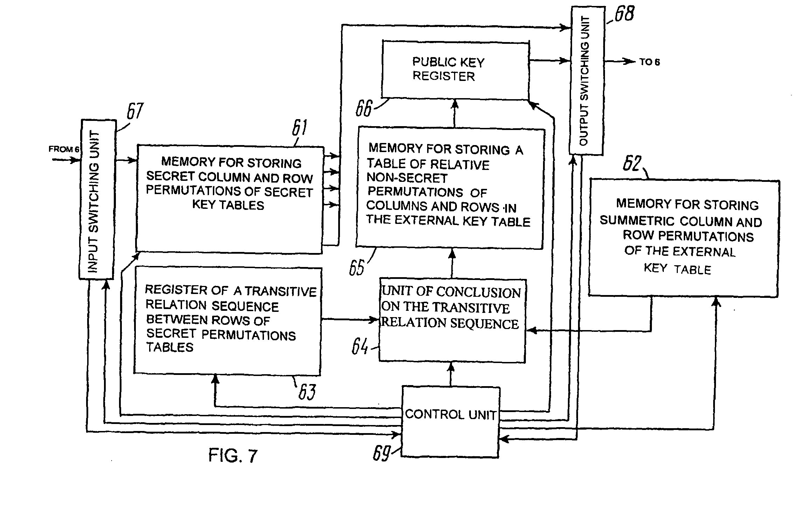

Fig.7 shows the public key table generating subsystem 8 of CCGDK 1, which subsystem 8 comprises a memory 61 for storing secret column and row permutations of secret key tables, a memory 62 for storing symmetric column and row permutations of the external key table, a register 63 of a transitive relation sequence between rows of said secret permutations tables, a unit 64 of logical conclusion on the transitive relation sequence, a memory 65 for storing a table of relative non-secret permutations of columns and rows in the external key table, a public key register 66, an input and output switching units 67, 68 and a control unit 69. Said control unit 69 is connected by its outputs, respectively, to inputs of said memories 61 and 62, registers 63 and 66, input and output switching units 67, 68 and the logical conclusion unit 64 being connected by its second and third inputs, respectively, to outputs of said memory 62 and register 63, and being connected by its output to input of said memory 65. The output of said memory 65 is connected to an input of said register 66 connected to an input of output switching unit 68 connected by its other input to outputs of said memory 61 connected by its input to output of the input switching unit 67.

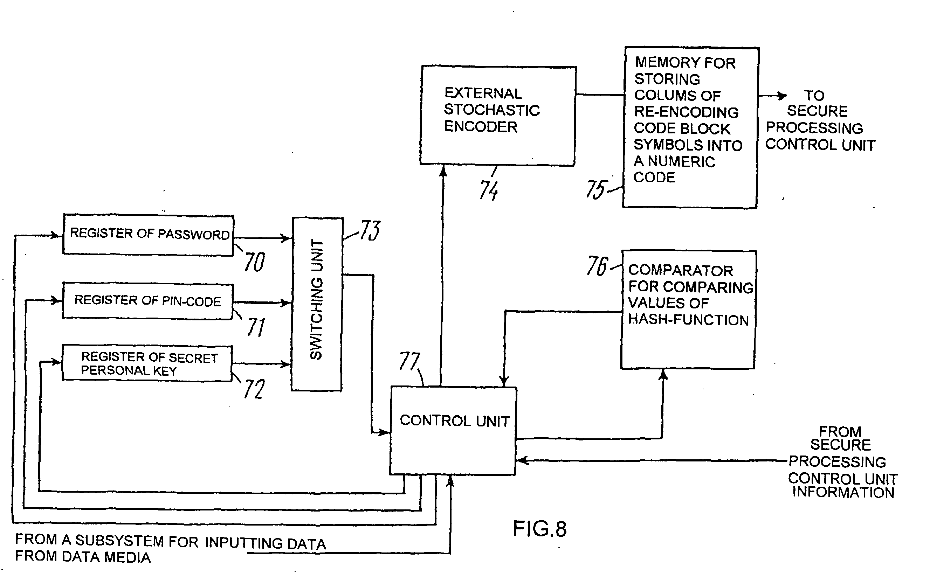

Fig.8 shows authentication and data integrity checking subsystem 9 (18, 23) used in CCGDK 1, user devices 2 and distributed data processing servers 3. Said subsystem 9 comprises registers 70, 71, 72 of, respectively, password, PIN-code and secret personal key, coupled to a switching unit 73, also comprises an external stochastic encoder 74 connected to memory 75 for storing columns of re-encoding code block symbols into a numeric code, and a comparator 76 for comparing values of hash-function, which comparator is coupled to said registers 70, 71, 72, to the switching unit 73 and the external stochastic encoder 74.

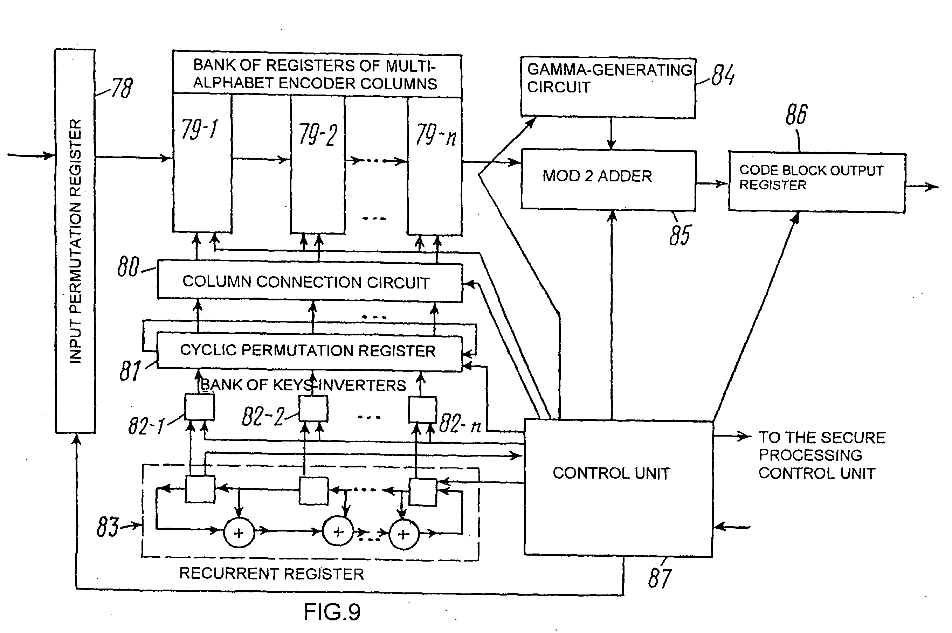

Fig.9 shows stochastic encoder 15 of the user device 2, comprising an input permutation register 78 for inputting data to be encoded, a bank of registers 79-1, 79-2, ..., 79-n of multi-alphabet encoder columns, being connected by its first input to the output of said register 78; a column-connecting circuit 80, being connected by its outputs to the second inputs of said bank of registers 79-1, 79-2, ..., 79-n; a cyclic permutation register 81 connected by its outputs to corresponding inputs of the column-connecting circuit 80; a bank of keys-inverters 82-1, 82-2, ..., 82-n, which is connected by its outputs to corresponding inputs of the cyclic permutation register 81; a recurrent register 83 connected by its outputs to corresponding inputs of the bank of keys-inverters 82-1, 82-2, ..., 82-n; a gamma-generating circuit 84, a mod 2 adder 85 connected by its inputs, respectively, to outputs of said bank of registers 79-1, 79-2, ..., 79-n, and those of gamma-generating circuit 84, the output of the mod 2 adder 85 being connected to input of a code block output register 86 for outputting encoded data. Besides, the stochastic encoder 15 comprises a control unit 87 connected by its outputs, respectively, to inputs of said registers 78, 81, 83, 86, the bank of keys-inverters 82-1, 82-2,..., 82-n, the column-connecting circuit 80, said bank of registers 79-1, 79-2, ..., 79-n, the gamma-generating circuit 84, the mod 2 adder 85. The control unit 87 being connected by an input to an additional output of the recurrent register 83, has additional input and output for communication with other control units of the system for integrated protection of distributed data processing in the computer system.

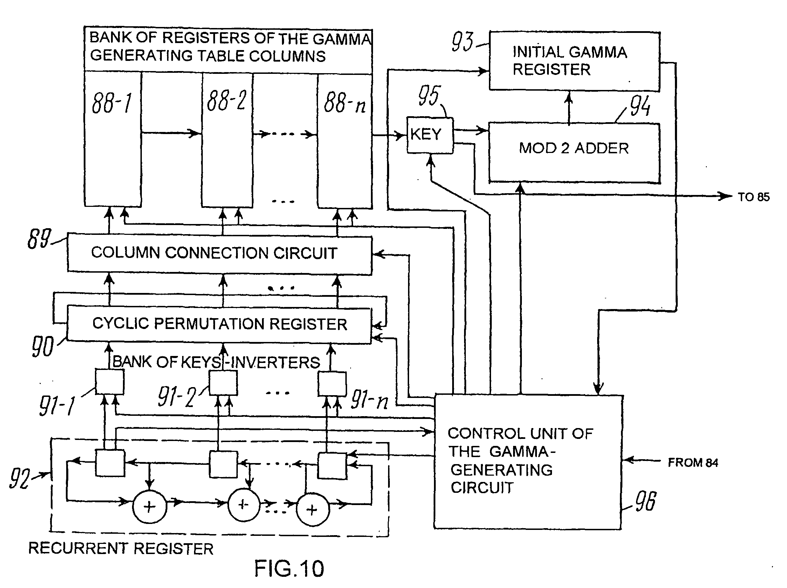

Fig. 10 shows the gamma-generating circuit 84 contained in the stochastic encoder 15 and including a bank of registers 88-1,..., 88-n of the gamma-generating table columns; a column-connecting circuit 89 being connected by its outputs to inputs of said bank of registers 88-1,..., 88-n; a cyclic permutation register 90 being connected by its outputs to corresponding inputs of the column-connecting circuit 89; a bank of keys-inverters 91-1,.., 91-n, being connected by its outputs to the corresponding inputs of the cyclic permutation register 90; a recurrent register 92 being connected by its outputs to corresponding inputs of the bank of keys-inverters 91-1,..., 91-n; an initial gamma register 93; a mod 2 adder 94; a key 95 being connected by its input to an output of said bank of registers 88-1,.., 88-n, and being connected by its first and second outputs, respectively, to an input of said mod 2 adder 94, and to an input of the mod 2 adder 85 of the stochastic encoder 15 (Fig. 9); and a control unit 96 being connected by its outputs to inputs, respectively, of the recurrent register 92, the bank of keys-inverters 91-1,..., 91-n, the cyclic permutation register 90, the column-connecting circuit 89, said bank of registers 88-1,...,88-n, the key 95, said mod 2 adder 94, the gamma-generating circuit 84, and the initial gamma register 93 being connected by its output to the input of said control unit 96 being connected by its second input to an additional output of the recurrent register 92, and being connected by its third input to a corresponding output of the control unit 87 of the stochastic encoder 15.

The stochastic decoder 14 (Fig.3) is implemented similarly to the stochastic encoder 15 shown in Fig.9. The only difference is that a direction of passage of a processed signal in the decoder is reversed as compared with the encoder (Fig.9). Thus, the unit 86 (the code block output register in Fig.9) in the stochastic decoder will be supplied with input data to be decoded, and decoded data will be outputted from the unit 78 (the input permutation register in Fig.9).

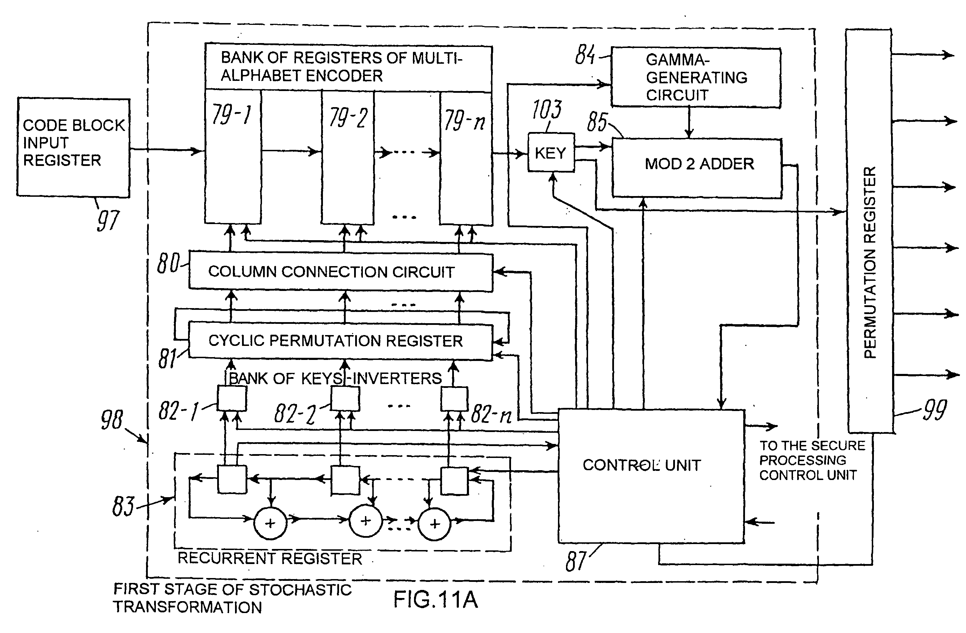

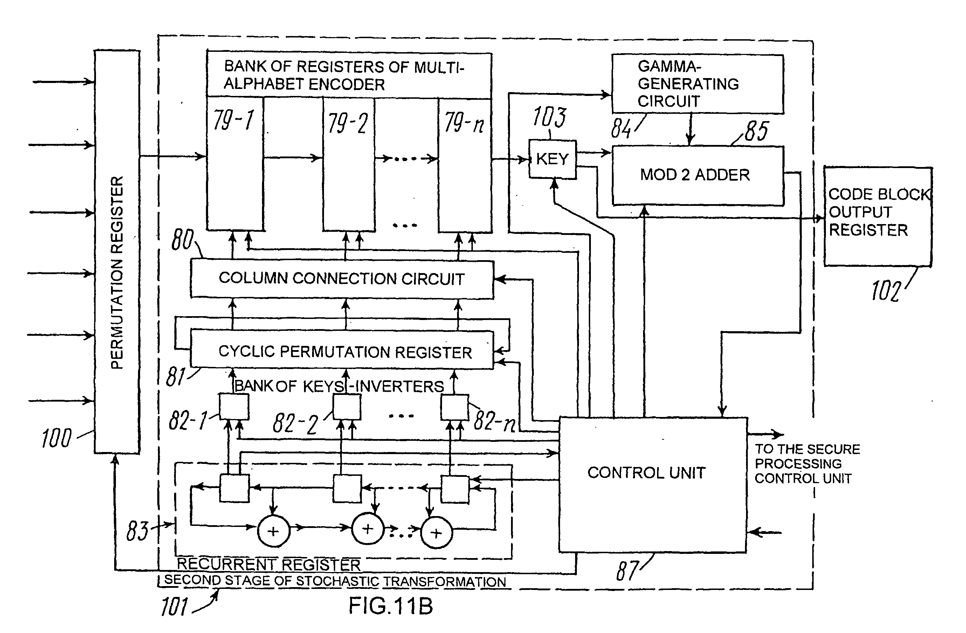

Figs.11A, 11B show the stochastic re-encoding device (23, 24 in Fig.3; 27, 28 in Fig.4) contained in the user device 2 and the distributed data processing server 3. The stochastic re-encoding device comprises in-series a code block input register 97, a first stochastic transformation stage 98, a first and second permutation registers 99, 100, a second stochastic transformation stage 101 and a code block output register 102. The first and second stages 98, 101 have identical structure, in general coinciding with that of the stochastic encoder 15 (components 79-85, 87 in Fig.9). The difference is essentially the presence of the key 103 between the output of the bank of registers 79-1, 79-2, 79-n and the input of the mod 2 adder 85; and the output of the key 103 being the output of the corresponding stochastic transformation stage.

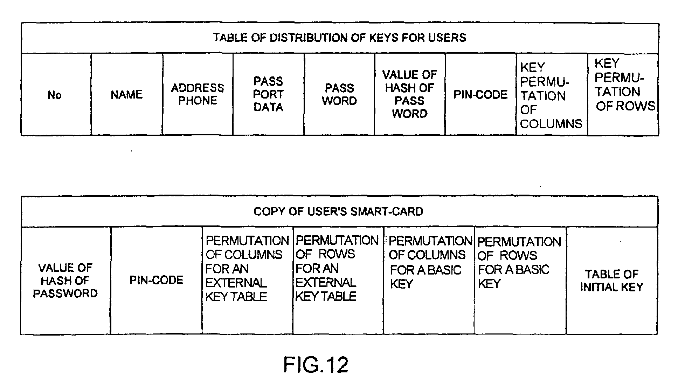

Fig.12 shows tables used in CCGDK.

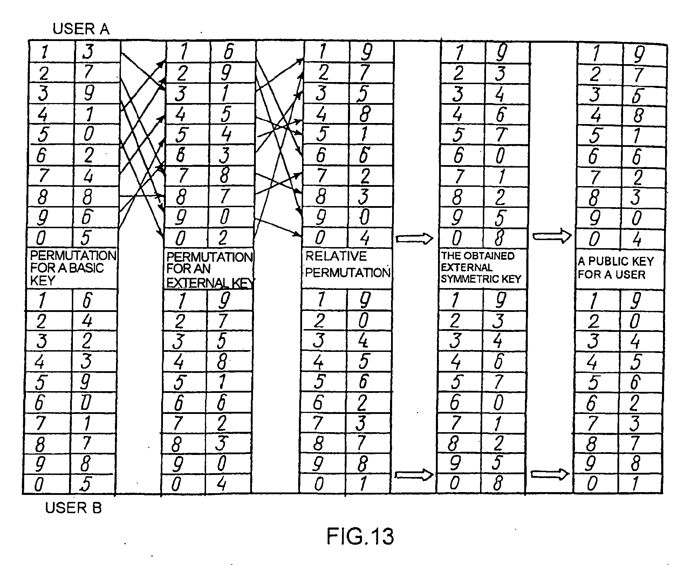

Fig. 13 illustrates a process of generating public keys for users in CCGDK.

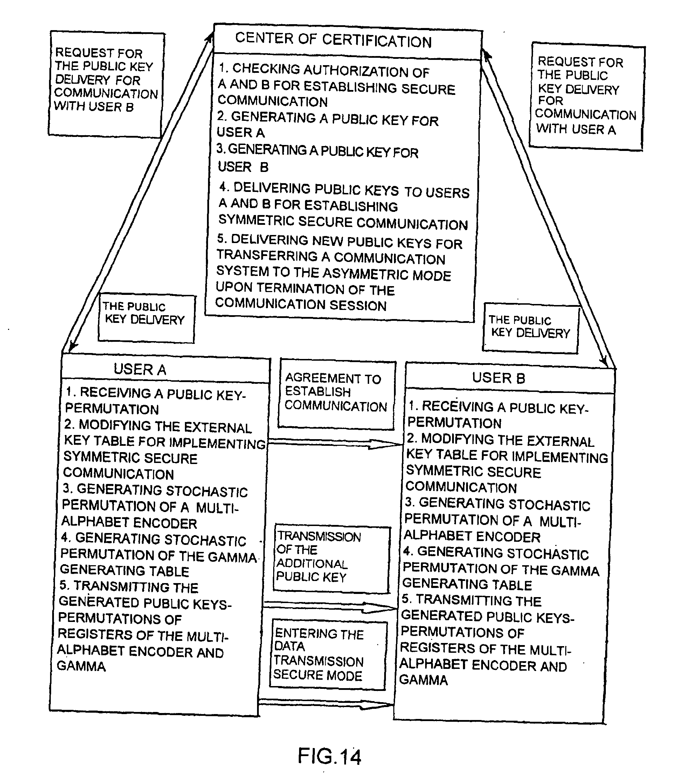

Fig. 14 schematically shows a key distribution procedure.

Below follows the detailed description of the exemplary embodiment of the proposed method and system for integrated protection of distributed data processing in the computer system (Fig.1).

The main purposes of CCGDK 1 are: connecting the user devices 2 to the security system, certifying user devices, generating and distributing secret and public keys between the user devices 2 and distributed data processing servers 3. A main system key (master-key) being a random code table is generated and stored in CCGDK 1 shown in Fig.2. Certifying of user devices 2 and distributed data processing servers 3 for connection to the security system is effected in the user certifying subsystem 4. The main key table is formed in the secret key table generating subsystem 5.

In the secret key table generating subsystem 5, based on the main secret key table, by random columns and rows permutations, a plurality of different initial secret key tables for users .is generated, and each of the obtained initial secret keys corresponds to a respective column and row permutation of the main secret key table. Then, in the same subsystem 5, for each of the initial secret key tables, by random permutations of its columns and rows, tables of a basic secret key and an external secret key are generated. Each of the obtained tables corresponds to a respective random columns and rows permutations in the initial secret key table. All these procedures are carried out under control of the datalogical secure computing system 6 executing corresponding programs in a secure form. The structure and operation of the datalogical secure computing system 6 are disclosed in Patent RU 2137185.

The generated initial key tables and random column and row permutations for the basic secret key and external secret key tables generation are sent to subsystem 7 of providing media for certified users. Said subsystem 7 provides data media to users certified for connection to the system for integrated protection of distributed date processing in the computer system.

Major column and row permutations used for generating each initial key table are stored in the table of distribution of keys for users (Fig.12). This table comprises values of PIN-code and password provided by the random number generator of the authentication and data integrity checking subsystem 9. According to the password and PIN-code combination, a value of its hash function is calculated as described below. Certifying of a user also provides storing his/her passport data. Then, for each certified user, subsystem 7 generates a data medium, i.e. a smart card, and its copy is stored at the certifying center 1. Said card contains the complete table of the initial key, and the set of secret keys permutations for user's basic and external key tables. Besides, the smart card contains PIN-code and the value of hash function of user's password (Fig.12). The smart card is provided to the user for inserting into his/her computer (the user device 2 or the distributed data processing server 3).

To generate a system of keys, the user enters data from the smart card into the computer. Thereafter, the computer generates the basic key table using columns and rows permutations specified in the smart card. Then, using appropriate permutations, the external key table and the code table of the secure arithmetic processor 10 are generated. The structure and functioning of the secure arithmetic processor 10 are disclosed in Nasypny V.V., "Secure arithmetic computations in computer systems", Mir PC, 1999, No. 4, pp. 73-74. The user device 2 and the distributed data processing server 3 use the secret key table generating subsystem 13, 25, the secure processing control unit 21, 30, and the datalogical secure computing system 20, 35 (Figs.3, 4).

Finally, the monitor will display a message "enter your personal password". After the user password has been entered into the secure access subsystem 16 of the authentication and data integrity checking subsystem 18, value of the password hash function is calculated using the basic key table and the secure arithmetic processor 19, which value is compared with that entered from the smart card. In the case of coincidence of the compared values, the secure processing control unit 21 is enabled and the user accesses it. If the compared values do not coincide, then, after m unsuccessful attempts the security system is blocked, and the smart card is cancelled. To obtain a new smart card, user has to address to CCGDK 1.

Upon access to the security system functions, on user's instruction, the basic secret key tables and the external secret key table are generated in the user device 2 based on the initial key table and secret permutations as inputted from the smart card. The generated basic secret key tables are subjected to random permutations of columns and rows to obtain the internal secret key table. Then copies of the internal secret key table are written into the internal stochastic encoder 15, the internal stochastic decoder 14 and the transceiving unit 22 including first and second stochastic data re-encoding devices 23, 24. The described procedures are carried out by execution of secure programs in the datalogical secure computing system 20 on commands from the secure processing control unit 21, 30. Thereafter, the secure processing control unit 21 implements configuring the internal stochastic encoder 15, the internal stochastic decoder 14 and ensures readiness to intra-computer secure data transmission and processing in the user device 2.

The same procedures of inputting data from the smart card using the secure access subsystem 31 having subsystem 32 for inputting data from the data medium and authentication and data integrity checking subsystem 33 are carried out in the distributed data processing server 3. After the user has been authenticated, the secure processing control unit 30 is activated and instructs the secret key table generating subsystem 25 to generate the external secret key and basic secret key tables. In doing that, based on the initial secret key table and secret permutations inputted from the smart card, basic secret key tables and then external secret key tables are generated. Copies of the internal secret key table are written in the internal stochastic data re-encoding device 29 and in the stochastic data re-encoding devices 27, 28 of the stochastic transformation transceiving unit 26. The above discussed procedures are carried out by execution of secure programs in the datalogical secure computing system 35 on commands from the secure processing control unit 30. Then, on commands from the secure processing control unit 30 connected to the datalogical secure computing system 35, secure e-mail address table 37, secure data tables 39 and secure web-sites files 38 are encrypted. For that purpose, on command from the secure processing control unit 36, the internal stochastic re-encoding device 29 is transferred into a stochastic encoder mode, with which an interface of the secure arithmetic processor 34 is matched.

Upon completion of the above-described process of generating the key tables, the user can request CCGDK 1 to establish a secure communication with the distributed data processing server 3 required. Said request must be preceded by an agreement, via a public communication, that such communication will be established. On said request, CCGDK 1 generates and distributes public keys among users for establishing a secure communication. A schematic diagram of this process is shown in Fig.14.

Functions of CCGDK 1, the user device 2 (user A) and the distributed data processing server 3 (user B) in the course of establishing the secure communication are discussed below.

Functions of CCGDK:

> 1) checking authorization of users A and B for establishing a secure connection;
> 2) generating the public key for the user device 2;
> 3) generating the public key for the distributed data processing server 3;
> 4) transmitting the public keys through the communication network to the user device 2 and distributed processing server 3 to establish a symmetric secure connection;
> 5) transmitting new public keys to transfer the communication network to an asymmetric mode upon termination of the connection session.

Functions of the user A (B):

> 1) providing a public key-permutation;
> 2) modifying the external key table to establish a symmetric secure connection;
> 3) generating a table for the stochastic data re-encoding device 23, 24 (27, 28) of the stochastic transformation transceiving unit 22 (26);
> 4) generating a table for the gamma-generating circuit of the stochastic data re-encoding devices 24, 24 (27, 28);
> 5) secure data transmitting.

Checking authorization of users (the user device 2 and the distributed data processing server 3) for establishing a public connection is done in the user certifying subsystem 4 (Fig.2) with reference to special tables determining a procedure of the permitted informational interactions of the system users in the secure mode. After authorization of the users is confirmed, public keys for the user device 2 and distributed data processing server 3 are generated automatically in CCGDK 1.

Public keys are generated based on a unidirectional function using relative permutations on sufficiently long combinations of random symbols (length n>100). As noted above, CCGDK 1 stores all columns and rows permutations enabling, for each user, generation of initial, basic and external secret key tables from the main key table. After the system is loaded, all these tables, inclusive of the external secret keys, will be asymmetric for different users. For establishing the secure communication between users A and B, their tables of the external secret keys should be brought into an identical status. This is provided owing to the presence of all above-mentioned functionally associated secret permutations of tables (initial, basic and external secret keys) in CCGDK 1.

The public key generating subsystem 8 (Fig. 2), using logical conclusion on sequence of transitive relation between rows of the secret permutation tables, determines relative permutations for users A and B to transfer the external secret keys to the symmetric status. Said relative permutations are public keys. Based on said keys, users A and B can transfer the external secret key tables to the identical status to establish the symmetric secure communication. To that end, the secret key table generating subsystem 5, via the datalogical secure computing system 6, transmits to the public key generating subsystem 8 data of the column and row secret permutation tables of the secret key tables (initial, basic and external keys). Then, based on said tables, sequences of transitive relations between rows of the secret permutation tables are generated. Further, using logical conclusion on transitive relation sequence, tables of relative non-secret permutations of columns and rows of the external secret key table are generated separately for the user device 2 and distributed data processing server 3. The generated tables are the public keys providing transfer of the external secret key tables of the user device 2 and distributed data processing server 3 into the symmetric status. The public keys are delivered to the key distributing subsystem 11 and sent through the computer system to the corresponding user device 2 and distributed data processing server 3.

The described function of public key generating based on a relative permutation is a unidirectional function for each of the system users. The reason is that CCGDK 1, having a complete functional relationship between keys-permutations, is able to compute function y=f(x) easily. Here x is a value of an initial, basic or external key; f represents functional relationships therebetween determined by secret permutations, y is a relative non-secret permutation. However, having only the value of y and not knowing the entire scheme of functional relationships between the tables, secret permutations and the original table of the initial, basic or external secret key cannot be restored. Whereas corresponding secret permutation tables are unique for each of the users, nobody but the user himself can build a new symmetric table of the external secret key to establish a secure connection with a given subscriber on the basis of the received public key. Moreover, nobody is able to compute the original values of the initial, basic or external key of the given user based on the generated key. The reason is that determination of said permutations and tables needs a complete exhaustive search of all possible combinations on the set of V=n! (for n=100, e.g. V>$10^{100}$, which is practically unrealizable). Thus, function y=f(x) is the unidirectional function for all other system users. Furthermore, even user B, whom user A interacts with, having, after processing of the public key, an identical external secret single-use key, is not capable of restoring the basic and initial secret keys of user A by reverse permutation.

Based on generated public keys, secret key table generating subsystem 13 and 25 of the user device 2 and distributed data processing server 3 generates tables of symmetric external secret keys. These tables are written into stochastic data re-encoding devices 23, 24 (27, 28) of the stochastic transformation transceiving unit 22 (26) of the user device 2 (distributed data processing server 3), thus providing establishment of a secure symmetric connection therebetween. In stochastic data re-encoding devices 23, 24 (27, 28) the required matching of the external and internal code tables is implemented to create a closed loop of secure data transmission and processing in environment of the user device 2 and distributed data processing server 3. This closed loop extends from the internal stochastic encoder 15 of the user device 2 to the internal stochastic data re-encoding device 29 of the distributed data processing server connected to the datalogical secure computing system 35, and backwards through the internal stochastic data re-encoding device 29 to the internal stochastic decoder 14 of the user device 2. During transmission of stochastically selected random elements of internal and external secret key tables a single-use key mode is effected, thus providing the needed level of information security.

After the secure communication session is completed, CCGDK 1 transmits to users A and B public keys-permutations to generate asymmetric tables of initial external secret keys.

Thus, relying on diversity of the information security functions (transmission and processing), the key system has two levels. The first level corresponds to tables of the initial, basic and external secret keys. The user enters these tables into the user device 2, the distributed data processing server 3 using data medium obtained from CCGDK 1. Said secret key tables are continuously (periodically) updated by means of public keys generated by CCGDK. During data transmission between users A and B, a system function of periodical modification of secret external key tables used in the stochastic encoder 14 and gamma-generating circuit 84 is implemented. This function is performed using public keys generated at the user device 2 and distributed data processing server 3 (users A and B) that participate in the secure data communications. During secure data exchange, said system function is essentially one of the basic procedures for ensuring reliable and secure communication. Selection of a period of secret external key table modification influences significantly the data security level.

The second level of the key system is presented by stochastic single-use keys. They are generated by means of external secret key tables used in the stochastic encoder 14 and gamma-generating circuit 84 by stochastic selection of unique combinations of random elements of said tables. This level is determined by local functions of stochastic encoding and gamma-processing performed using stochastic single-use keys.

Generally, reliability and security of the stochastic data encoding process depend both on periodicity of the system function of modifying the secret external key table, and on efficiency of stochastic single-use keys of the stochastic encoder 14 and the gamma-generating circuit 84.

The secure processing control unit 30 determines, based on the received message format, the type of processing to be executed in the datalogical secure computing system 35 using secure data and stochastically transformed programs. This processing can be an e-mail transmission, arithmetic computations, search and data retrieval and the like according to a condition specified in a query to provide a required information from the encrypted database 36. Said functions are performed using the internal stochastic data re-encoding device 29 connected to the secure processing control unit 30 and the datalogical secure computing system 35. The procedure for performing said functions of secure information processing using the secure stochastically transformed programs in the datalogical secure computing system 35 is described below.

In the course of information processing, using the stochastically transformed programs and data in the datalogical secure computing system 35, their integrated protection against unauthorized access, program mines and viruses is provided.

When new programs are entered, before and after the stochastic transformation of each entered program, antivirus protection in the datalogical secure computing device is effected based on the detection of virus signatures using logical conclusion on a plurality of program instruction codes. First, the instruction codes capable of utilizing the viruses for unauthorized actions with respect to programs, data and textual files are defined. Then, using logical conclusion, strings of logically-coupled instruction codes, inclusive of said virus signature are obtained, and a target function of each such string is determined. If said target function has a virus nature, then a corresponding string of logically associated instructions relates to the virus signature to be destructed.

Below follows the description of operation of individual subsystems and devices of the claimed system.

Underline: User certifying subsystem 4 (Fig.2)

This subsystem comprises standard devices of data input/output connected to the secret key table generating subsystem 5. The subsystem 4 performs inputting of user passport data when users are certified for the purpose of connection to the secure distributed data processing system in computer systems. The passport data are written in the key distribution tables for users (Fig.12) stored in the secret key table generating subsystem 5.

Secret key table generating subsystems 5 (Fig.5)

This subsystem is within CCGDK 1. Its purpose consists in generating initial secret keys for certified users, based on the main secret key table by means of random permutations of columns and rows in a plurality of tables. Further, this subsystem generates tables of secret permutations of columns and rows to produce, based on the initial secret key table, tables of the basic and external secret keys for each of the users (Fig.12). This subsystem is enabled on commands from the datalogical secure computing system 6. The processing result is sent to said system 6, to the subsystem 7 for providing media for certified users and to the public keys generating subsystem 8. The control unit 48 of said subsystem 5 having the random number generator 43 is enabled on the delivered commands. Then a process of random number sequence generation starts, and said sequence is supplied to the combination selector 44 to select n random numbers supplied via the control unit 48 to the column permutation register 45. Thereafter, in the same manner, the row permutation register 46 is filled with n different random numbers whereupon the random number generator 43 is disabled temporarily. Then the process of generating the initial secret key table by permutations of columns and rows of the main secret key table is carried out using the column and row permutation registers 45, 46. For that purpose, on commands from the control unit 48, rows from the main secret key table are first retrieved alternately, and each row is written into the column permutation register 45, wherein fields of a given i-th row are permutated according to the written random sequence. The obtained rows, via the switching unit 47 and the control unit 48, are supplied to the memory 41 for storing initial secret key tables and written into the generated initial secret key table for the next user, and the row number being determined by corresponding i-th random number read out from the row permutation register. As a result, after n rows have been read out and the above mentioned permutations performed in the memory 41 for storing initial secret key tables, the initial secret key table for the next user will be generated. Then, said table, via the control unit 48, is supplied to the memory 42 for storing key distribution tables and written into a corresponding key distribution table for said user (Fig.12). Into the same table, via the switching unit 47 and the control unit 48, sequences of secret column and row permutations from corresponding registers are written. After that, the control unit 48 again enables the random number generator 43, which provides random permutations of column and rows, first to form the basic secret key table, then - to form the external secret key table. The obtained secret permutations are supplied alternately, via the switching unit 47 and the control unit 48, to the memory 42 for storing key distribution tables, and entered into the table of a smart card copy for the next user (Fig.12). Tables of the initial secret key and relevant secret permutations of columns and rows from an appropriate key distribution table for users are written thereto as well. Then, on command from the control unit 48, the random number generator 43 generates values of PIN-code and password for a given user. The obtained values, via the combination selector 44 and the control unit 48, are supplied to the memory for storing initial key tables and written into the key distribution table for said user (Fig.12). Therefrom, values of PIN-code and password, via the control unit 48 and the switching unit 47, are supplied to the datalogical secure computing system 6. Further, these values, via the key distributing subsystem 11 and the secure processing control unit 12 are supplied to the authentication and data integrity checking subsystem 9. Here, according to a PIN-code and password combination, values of password hash functions are generated and, in the reverse order, supplied to the secret key table generating subsystem and written into said key distribution table for users. The procedure of generating the value of password hash function in the authentication and data integrity checking subsystem 9 is discussed below. Then values of PIN-code and password hash function are entered into the table of the smart card copy for a given user (Fig.12). After that, the formed copy of user's smart card, via the datalogical computing system 6, is delivered to the subsystem 7 for providing media for certified users.

Subsystems 7 for providing media for certified users (Fig.3)

In this subsystem, the above mentioned copy is written into a suitable data carrying medium. This medium (smart card) is given to a relevant user, a value of the personal password being announced orally.

Secret key table generating subsystem 13, 25 of the user device 2 (the distributed data processing server 3)

This subsystem is enabled after insertion of a smart-card into subsystem 17, 32 for inputting data from a data medium of the secure access subsystem 16, 31, using the authentication and data integrity checking subsystem 18, 33. After a user has been authenticated, on command from the secure processing control unit 21, 30 the user initial key table, read-out from the smart-card, is supplied via the switching unit 59 and control unit 60. At that, the corresponding numeric sequences are read out from the smart-card into the column and row permutation registers 55, 56 to generate the external key.

Then the process of generating the basic secret key table by permutation of columns and rows of the initial key using the filled-in column and row permutation registers 55, 56 is commenced to generate the basic secret key table. For said purpose, on command from the control unit 60 rows from the initial secret key table are first retrieved alternately, then each row is registered in the column permutation register 55, wherein fields of a given i-th row are rearranged according to the written random sequence. The row obtained is supplied to the memory 50 for storing the basic key table via the switching unit 65 and control unit 60. Said row is written therein to the basic secret key table being generated for a given user. The row number is determined by the corresponding i-th random number read-out from the row permutation register 56. As a result, after reading out n rows and performing said permutations in the memory 50 for storing the basic key table, the basic secret key table will be generated for a given user.

The basic secret key table generated is the initial table for generating the external secret key table on the basis of n various random numbers written in the column and row permutation registers 57, 58 to generate the external secret key table. The procedure of generating the external secret key table by re-arranging the columns and rows in the basic secret key table is identical to the above-discussed algorithm for generating the basic key. The algorithm implementation results in writing the external secret key table generated for a given user into the memory 51 for storing the external key table.

Then, on command from the control unit 60, the random number generator 53 is enabled. As a result, random sequences, each containing n different random numbers, are supplied to the column and row permutation registers 57, 58 via the combination selector 54 and control unit 60 to generate the external secret key table. In this case, these random sequences are applied to generate the internal secret key table on the basis of the basic secret key table obtained previously. Then the random number generator 53 is disabled temporarily and the above-described algorithm of permutation of columns and rows of the basic secret key table is implemented. At that, the internal secret key table obtained is written in the memory 52 for storing the internal key. Thus, tables of the basic, external and internal secret keys needed for implementation of the secure information transmission and processing in the distributed processing server 3 and user device 2 are generated.

Public key generating subsystem 8 (Fig.7)

The purpose of this subsystem consists in generating public keys for the user device 2 (user A) and distributed processing server 3 (user B), the keys providing transformation of external secret keys of the user device 2 and server 3 to the symmetric status. As it is noted above, this function is performed each time the secure connection between users A and B is established. Generating the public keys is implemented by the logical conclusion on the functionally associated tables of secret permutations of columns and rows using transitive relations. Prior to the start of said process, CCGDK 1, by means of the random number generator 43 and combination selector 44 of the secret key table generating subsystem 5, generates sequences of secret permutations of columns and rows for a symmetric external key. These sequences enable to generate symmetric tables of the external secret key for users A and B based on the main secret key table by appropriate permutations of columns and rows. However, in view of the fact that the tables of the initial, basic and external secret keys generated for each user are different, the corresponding permutations must be logically processed. At that, relative non-secret permutations (public keys) for users A and B are calculated, thus enabling to transfer the asymmetric external secret key tables of the users to the symmetric (identical) status. For this purpose, said secret permutation of tables of columns and rows is written into the memory 62 for storing symmetric column and row permutations of the external key table via the datalogical secure computing system 6, the switching unit 67, and the control unit 69.

In general cases each sequence of the secret permutation has the following form:

1→i, 2→j, 3→l, ..., m→key, ..., n→r,

where 1, 2, 3, ..., n are serial numbers of the initial columns (rows) of the main secret key, i, j, l, ..., r are their random numbers of permutation. The serial numbers form the entry column of the permutation table, and the random permutation numbers form its exit column.

After that, all tables of secret permutations for user A(B) are written into the memory 61 for storing secret column and row permutations of secret key tables from the secret key table generating subsystem 5. In accordance with the aforesaid, on the basis on the main secret key table these tables enable to first generate the initial secret key table and then the tables of the basic and external secret keys, using the appropriate permutations of columns and rows. Said tables have the functional relationships between different rows, which can be determined by selecting the identical numbers in the exit column of each preceding table and in the entry column of each subsequent table. At that, the secret permutation tables are arranged as follows: the tables for generating the initial secret key, tables for generating the basic secret key, tables for generating the external secret key (Fig.13). After that, to generate the initial secret key the first row of the table of secret permutations is selected, and the following transitive relation 1→i, →j, →k is formed on the basis of functional relations, which couples permutations of the first element of the main secret key in a plurality of said permutation tables. This transitive relation is written into register 63 of the transitive relation sequence via the switching unit 68 and control unit 69, and then supplied to unit 64 of logical conclusion on the transitive relation sequence. Value of the first row of permutation table (1→i) is also supplied to said unit 64 from the memory 62 for storing symmetric column and row permutations of the external key table. As a result of the logical conclusion, the initial transitive sequence is supplemented with the relation k→i, and the initial transitive sequence takes the following form: I→k, →j, →k, →i=1→i. The result of the logical conclusion coincides with the first row of the table of a symmetric permutation of columns (rows) of the external secret key table. At that, the first row of relative (non-secret) permutation of the public key is generated in the form of k→i. Then the same procedures are carried out with respect to the second row of the table of a secret permutation of columns and rows of the initial secret key, basic secret key, the table of symmetric external key, etc. Implementation of n logical conclusion procedures results in generating the public key in the form of the table of a relative permutation of columns (rows) for user A (B). It is noted, that each public key comprises two permutation tables (a table for columns and a table for rows). At that, a unique public key is generated for each user. The obtained relative permutations are written in the memory 65 for storing a table of relative permutation of columns and rows in the external key table, and therefrom they are read out into the public key register 66. Then, on command from the control unit 69 the public key is supplied to the datalogical secure computing system 6 via the switching unit 68. Therefrom said key is delivered to user A (B) via the key distributing subsystem 11 over the computer system. After reception in the user device 2 or distributed processing server 3 the public key is supplied to the secret key table generating subsystem 13, 25. The public key comprising two permutation tables is written via the switching unit 59 to the column permutation register 55 for generating the external key table and to the row permutation register 56 for generating the external key table. Then, on the basis of the table of the asymmetric external secret key written into the memory 51 for storing the external key table the symmetric external secret key table is generated in the user device 2 and distributed processing server 3 by means of the appropriate permutation of columns and rows.

Authentication and data integrity checking subsystem (Fig.8)

An electronic digital signature is used when public keys are transmitted through a communication system between CCGDK 1, user device 2 and data distributed processing server 3. Said signature bases on a hash function and a user personal secret key.

To implement a hash function, a unidirectional function based on the stochastic encoding technique is used. At first the procedure for generating the hash function in the public data transmission mode is considered. For rational usage of resources in synthesizing the hash function of a message (document), being transmitted from user A to user B, algorithms of the secure mode establishment are utilized to the maximum extent. Therefore, to rationalize the obtainment of the hash function, the procedures of generating the public keys, transferring the external secret key tables into symmetric mode and adding the information using a secure arithmetic processor are used. The hash function can be used not only for authentication of electronic documents, but also for authentication of a user when he/she enters a password into a computer. To implement the hash function for authentication of the electronic documents transmitted in the public mode, users A and B request public keys-permutations from the certifying center so that to transfer the external secret key tables to the symmetric status. At that, the above-mentioned algorithm of generating and transmitting the public key for users A and B is implemented. The public key generated is supplied to the secret key table generating subsystem 13, 25 of the user device 2 (user A) and distributed processing server 3 (user B). Further, said algorithm of transferring the external secret key tables of users A and B to the symmetric status is used. The table generated is delivered to the control unit 77 and external stochastic encoder 74 of the authentication and data integrity checking subsystem 18, 33 via the secure processing control unit 21, 30. At that, the external encoder of users A and B is configured to the symmetric transmission mode. Then the data transmission starts in the public mode between users A and B. At the same time, each i-th data element transmitted (i=1 - N) is supplied to the external stochastic encoder 74 of the authentication and data integrity checking subsystem 18 and subjected to stochastic encoding and gamma-processing. Then, the code block obtained is re-encoded to a numeric code in the memory 75 for storing columns of re-encoding code block symbols, and is supplied to the secure processing control unit 21. Said code block is further delivered to the datalogical secure computing system 20 and added to the preceding (i-1)-th code block and the stochastically transformed i-th code block in the secure arithmetic processor 16. As a result, after transmission of all N elements of the message data, a 64-byte combination being a compact representation of a transmitted document will be generated in the secure arithmetic processor. In distributed processing server 3 (user B) during reception of each i-th code block of a message the same procedures of the hash function synthesis are executed. After reception of all N code blocks, the hash function values, that have been obtained through the system and generated in distributed processing server 3, are supplied to the secure processing control unit 30, and then - to the authentication and data integrity checking subsystem 33. In said subsystem on command from the control unit 77 said combinations are delivered into comparator 76 for comparing values of hash-function. Values of the hash function transmitted by user A and values of the hash function generated by user B are compared therein. When said values of a document coincide, a document is considered to be authenticated. Stochastic encoding provides the following advantages:

- security, guaranteed with a predefined probability, against any changes in a text during its transmission (insertions, rejections, permutations, etc);
- uniqueness of the obtained hash function (the probability that the hash function values of different documents would coincide, is negligible);
- irreversibility of the hash function, since the problem of selection of a document having the same hash function value is computationally insoluble.

The same algorithm of generating the hash function of transmitted messages is applied in the secure mode. At that, user A generates the hash function simultaneously with encoding the transmitted data elements; and user B implements the hash function after decoding of each next unit by the repeated encoding procedure.

During generating the hash function of a password the basic key table is written into the external stochastic encoder of the authentication and data integrity checking subsystem 18, 33. Said function ensures filling the tables of said encoder. In this case, the user password and PIN-code value, supplied from subsystem 17 for inputting data from data media, are encoded and written into the password and PIN-code registers 70, 71 of the authentication and data integrity checking subsystem 18, 33. After adding the stochastically transformed combinations in the secure arithmetic processor 19, 34, the obtained combination of length n is delivered to the datalogical secure computing system 20, 35 where it is divided into sections of a pre-determined length of m<n, which are mod 2 added. Then, the value obtained is supplied to comparator for comparing the hash-function values via the secure processing control unit 21, 30 and compared with the hash function value of the password stored in the certified user data medium (smart-card).

When generating the electronic digital signature, user A generates a personal secret key in the form of a permutation of rows of the external secret key table using the random number generator of the secret key table generating subsystem 5. At that, the external stochastic encoder 74 of the authentication and data integrity checking subsystem 18 is reconfigured according to said combination. Then, the public key is computed in the form of a relative non-secret permutation between preceding and new arrangement of rows of the external secret key table in the secure processing control unit 21 of user A. This public key is transmitted to user B and can be transmitted to CCGDK 1 for registration of the user A personal key. Based on the public key received, user B re-arranges the external secret key table for decoding and checking the user A electronic signature. When generating said key, the functional relationships between secret permutations of the relevant tables of users A and B are used. The public key for user B can be also computed in CCGDK 1 during registration of the user A personal key. For that purpose, the relative non-secret permutation generated by user A and the functional relationships between secret permutations of the relevant tables of users A and B are applied.

The combination of the document hash function, as formed during its transmission, is transformed in the external stochastic encoder 74 of the user A authentication and data integrity checking subsystem 18 using the generated certified key. Upon receipt of the encoded hash function in the end of a message User B decodes the hash function using the public key generated and compares it with the previously generated value of the received message hash function.

Stochastic encoder (Fig.9)

Below follows a detailed description of synthesis and operation of a stochastic encoder (15, 74) of the user device 2 and distributed processing server 3, as well as decoder 14 on the basis of the obtained tables of the internal or external secret keys. It is noted, that the functions of an encoder (decoder), described below, can be also performed by stochastic re-encoding devices (23, 24 in Fig.3; 27, 28, 29 in Fig.4) comprised by the user device 2 and distributed processing server 3. Therefore, description of the stochastic encoder (decoder) 15 (14) operation is the common for a series of said devices.

The stochastic encoder operation is based on tables of the internal (external) secret key. For this purpose, the table of the internal (external) secret key is divided into two m x m/2 portions. The first portion is used to fill the bank of registers 79-1, 79-2, ..., 79-n of the multi-alphabet encoder columns (Fig.9), while the second is used in the gamma-generating circuit 84 (n=m/2). Contents of the cyclic permutation registers 81, 90 are generated from the table of permutation of rows of the corresponding basic or external key table. In the information exchange process the contents change periodically under action of the random number generator 53 of the secret key table generating subsystem 13 of the user device 2 on the transmission side. At that, the relative permutation between preceding statuses (not more than n) and a subsequent status of the permutation cyclic registers 81, 90 is sent to the reception side, the permutation being obtained in the secure processing control unit 21. This combination is calculated in the secure processing control unit 21, using the public key generating algorithm based on the logical conclusion on transitive relationships of the permutation tables. This algorithm is analogous to the public key generating algorithm implemented in the public key generating subsystem 8. The relative permutation obtained thereby is the public key, which is periodically exchanged between users A and B during the secure data transmission. Having received the second public key from user A, user B calculates a new combination in the secure processing control unit 30 for writing the combination into the permutation cyclic register 81, 90. Calculation of this combination is implemented on the basis of the preceding combination of the permutation cyclic registers 81, 90 and the public key obtained. Therefore, stochastic encoders 15 and decoders 14 of each user will have the identical random combinations in the permutation cyclic registers 81, 90. Furthermore, in the process of the secure information exchange between users A and B the generated random combinations, transmitted with the public keys, may be periodically used for synchronous replacement of contents of the input (output) permutation register 78 of the stochastic encoder (decoder) 15, 14. The random combinations obtained can be also used in the user device 2 and distributed processing server 3 for the stepwise replacement of contents of columns of the bank of registers 79-1, 79-2, ..., 79-n of the multi-alphabet encoder columns and the bank of registers 88-1, 88-2, ..., 88-n of the gamma-generating table (Fig.9).

Generally, in the secure processing control unit 21, 30 1 to m new random sequences can be generated on the basis of a next public key and secret key tables. These sequences are used to replace a required number of combinations of the column registers of the bank of registers 79-1, 79-2, ..., 79-n of the multi-alphabet encoder columns, and combinations of the column registers of the bank of registers 88-1, 88-2, ..., 88-n of the gamma-generating table columns.

The above-described procedures of periodic replacement of contents of the permutation cyclic registers 81, 90, the input (output) registers 78 and columns of the bank of registers 79-1, 79-2, ..., 79-n of the multi-alphabet encoder columns and the bank of registers 88-1, 88-2, ..., 88-n of the gamma-generating table provide the actual modification of the internal (external) key tables by random permutation of columns and rows and their step-wise replacement. The same procedures are carried out in the stochastic re-encoding devices 23, 24, 25, 27, 29 of the user device 2 and distributed processing server 3 when the devices perform the functions of encoders (decoders). These functions are directed to an improvement of computational stability of the system. The guaranteed security level of the data transmission and processing depends on periodicity of said functions of permutation and replacement. In the normal operation mode the above-discussed procedures of modifying the external (internal) key tables using public keys are carried out after transmission of N and more code blocks. In the mode of raising the security level the period of modifying the external (internal) key tables of stochastic encoders (decoders) by public keys can be reduced up to transition to the mode of applying the single-use external (internal) key tables. Said mode, characterized by the maximum security level, will be described below.

Thus, a periodic modification of external (internal) secret key tables using the public keys is the above-described system function intended to provide a predefined level of the data transmission security.

The internal stochastic encoders 15 are used to ensure security of the information exchange over computer buses. At that, the bank of registers 79-1, 79-2, ..., 79-n of the multi-alphabet encoder columns is filled on the basis of random information from the first portion of the internal secret key table. The second portion of said table is used for the gamma-generating circuit 84.

Below described is an example of implementation and operation of the stochastic encoder 15 with the following specific parameters: m=256 bytes, the code block length N=64 bytes, the number of columns n=m/2=128 bytes. Said encoder has the cyclic register 31 of permutation having length of m/2=128 bytes, the column-connecting circuit 80, the bank of keys-inverters 82-1, 82-2, ..., 82-n and the recurrent register 83 that is described by the irreducible polynomial $P(x^{127})$ $=x^{127}+x+1$.

The input alpha-numeric ASCII-code table comprising 256 rows is rearranged for the encoder operation according to a permutation of the external key table rows. This table is written into the input permutation register 78.

When forming the permutation input table, besides the ASCII-code (rows 1-127) rows are introduced for two-byte numeric combinations (00-99), as well as for special control symbols (a textual unit, a numeric unit, a public unit, a secure unit, a numeric integer unit, a numeric fixed-point unit, a numeric floating-point unit, etc.).

When implementing the secure mode data exchange, the keyboard information is encoded using the internal stochastic encoder 15 and converted into secure 64-byte units. In this case, a separate code table of 64 columns and 256 rows is generated for each data unit. The columns of the bank of registers 79-1, 79-2, ..., 79-n of the multi-alphabet encoder columns are selected by the recurrent register 83 and the permutation cyclic register 81, wherein a successive random combination of an n-byte permutation is written. In the recurrent register 83 the 127-byte combination containing N>64 units is selected by carrying out the sequence of successive shifts, starting from 000...1. Taking into account a random permutation of the cyclic register 81, position "1" in the obtained combination of the recurrent register 83 determines the columns of the bank of registers 79-1, 79-2, ..., 79-n of the multi-alphabet encoder columns to be used for encoding the next input data element. At that, on signal from the control unit 87 the n-byte random combination in each i-th column of the bank of registers 79-1, 79-2, ..., 79-n of the multi-alphabet encoder columns may be cyclically shifted by a random number of bytes written in the i-th location of the permutation cyclic register 81. Thereafter, the symbol-wise encoding is carried out by replacing in the multi-alphabet encoder the next combination from the permutation input register 78. At that, a random code in the i-th row of the corresponding column cyclically shifted by a random number of bytes (0 to 256) is used for encoding each j-th symbol in the i-th row of the input permutation register 78. This column is among 64 columns selected with regard to the combination of the recurrent register 83 and the permutation cyclic register 81. For encoding the next unit successive shifts of the recurrent register 83 are carried out again until a new combination having n>64 units is obtained. At that, a random combination in the permutation cyclic register 81 is cyclically shifted by one byte. Thereafter, in accordance with the new combination, the combination in each i-th column of the bank of registers 79-1, 79-2, ..., 79-n of the multi-alphabet encoder columns is randomly cyclically shifted in register 81.

As $P(x^{127})$ polynomial is irreducible, its associated recurrent register provides successive generation of all $(2^{127}-1)$ possible different combinations. Hence, for encoding each next unit, a new multi-alphabet code (a single-use key) is used, the code being defined by the next combination of the recurrent register 83, the combination including N>64 units, as well as by contents of the permutation cyclic register 81 and a random combination of the permutation input register 87.

If the next combination of the recurrent register 83 comprises N<64 units, then on signal from the control unit 87 the combination is inverted in the bank of keys-inverters 82-1, 82-2, ..., 82-n. As a result, this combination includes N>64 units. After transmitting N code blocks on signal from the secure processing control unit 21, the above-described system function of modifying the internal (external) key table of stochastic encoders (decoders) using a public key is implemented. At that, on command from the control unit 87, the combinations in registers of the bank of registers 79-1, 79-2, ..., 79-n of the multi-alphabet encoder columns are cyclically shifted to transfer them back them to the initial status.

Each encoded data element can include either a word (textual element), or a number indicating the representation form (integer, floating-point or fixed-point).

When introducing textual information, each i-th symbol is encoded after an initial permutation (in accordance with the external key table), using i-th column of the bank of registers 79-1, 79-2, ..., 79-n of the multi-alphabet encoder columns. At that, the number of j-th row of the given column is determined according to the number of j-th row that corresponds to the given symbol in the initial permutation table.

After the textual element has been inputted, the service four-byte combination comprising said service symbols, is generated. This combination also performs the simulation security function.

If the textual combination length is less than 60, then the remaining positions are filled with encoded numeric values. Said values are generated by the multi-alphabet encoding of a numeric combination having number i, the combination being the first one after j-th symbol that completes the textual data element, when moving along the input permutation table.

When inputting a numeric data element in the permutation input register 78, numeric combinations are generated to the right and left of the point by m(=2) digits. Then, the combinations are encoded by accessing the input table (rows 128-256) and by subsequent transforming in the bank of registers 79-1, 79-2, ..., 79-n of the multi-alphabet encoder columns. Thereby, each next combination j within the numeric data element is transformed into a stochastic index $j^{(u)}_{\xi i}$ by encoding with the use of j-th column. In the code block being generated the numeric combination whose length must not exceed 60 bytes, is followed by a service combination. If said numeric data element less than 60 bytes, then it is completed with the service combination (4 bytes). Thereafter, a variable code of a letter with number i is inserted, in the permutation input table this letter follows immediately after j-th letter, completing the m-byte numeric combination.

The code blocks generated are supplied to the mod 2 adder 85 to be added with the gamma outputted from the gamma-generating circuit 84, and then they are written into the code block output register 86.

Gamma-generating circuit (Fig.10)

When synthesizing by the gamma-generating circuit 84, the second m $\times$ m/2 portion of the internal (external) code table is used. Said portion is used to fill the bank of registers 88-1, 88-2, ..., 88-n of the gamma-generating table columns (Fig.10). In the above-discussed example, the gamma-generating circuit (Fig.10) comprises the table having the following parameters: m=256 bytes, n=m/2=128 bytes, a similar recurrent register 92, the bank of keys-inverters 91-1, 92-2, ..., 92-n, the permutation cyclic register 90 having length of m=128, as well as the column-connecting circuit 89, the mod 2 adder 94 having length of 256 bytes, and the initial gamma register having length of 64 bytes.

As it is noted above, after generating the next code block its gamma-processing is carried out by adding to 64-byte gamma in the mod 2 adder 85. This random sequence is generated in the gamma-generating circuit 84. At that, the relevant columns are retrieved first from the bank of registers 88-1, 88-2, ..., 88-n of the gamma-generating table columns under control of the combination obtained in the recurrent register 92 after the next i-th shift of the initial combination 000...01 using the permutation cyclic register 90 and the column-connecting circuit 89. The columns, whose numbers in the i-th sequence correspond to "1", are selected among 128 columns. The procedure of cyclically shifting each random combination from the bank of registers 88-1, 88-2, ..., 88-n of the gamma-generating table columns by a random number of bytes can be implemented on signal from the control unit 96 of the gamma generation circuit. This procedure is carried out in the same manner as in the stochastic encoder 15. At that, the random permutation combination, written into the cyclic permutation register 90 after implementing the next cycle of modifying the internal (external) key table of the stochastic encoder, is used. The number of entries in the selected sequence must be not less than the predetermined value t (2<t<N). Thus, the control unit 95 of the gamma generation circuit is provided. Then the selected columns, each being a random 256-byte combination, are supplied via key 95 to the mod 2 adder 94, where they are mod 2 added. The random combination obtained is written into the initial gamma register 93 and then forwarded to the control unit 96 of the gamma-generating circuit. The next transformation of the initial gamma is carried out therein. For that purpose, the function of permutation with the use of the next random combination of length m can be applied. This combination, received from the control unit 87, is used for the next modification of the external (internal) secret key table of the stochastic encoder 15. At that, the combination considered is used to replace contents of a predetermined number of columns of the bank of registers 88-1, 88-2, ..., 88-n of the gamma-generating table columns, as well as to replace contents of the cyclic register 90.

The second version of transforming the initial gamma combination consists in encrypting it by the software implementation of the DES (AES) encryption standard. A section of the next random combination applied to modify the external (internal) secret key tables is used as the key for this encryption algorithm. The combination generated by transforming the initial gamma is divided into four 64-byte sections and mod 2 added. As a result, a random combination is obtained and written into the initial gamma register 93. This combination can be directly used for gamma-processing of the next code block or for generating N distinct random sequences intended for gamma-processing of N next code blocks (N=64). In the first case, the formed combination is supplied from the initial gamma register 93 to the mod 2 adder 82 of the stochastic encoder 15 via the control unit 96 of the gamma-generating circuit and key 95.

It should be noted, that the gamma-generating circuit initially provides generation of ($2^{127}$-1) different values of random combinations. The timely replacement of contents of the gamma-generating table allows to render this random number generator period infinite. Contents of the bank of registers 88-1, 88-2, ..., 88-n of the gamma-generating table columns are changed upon modifying the security system of the initial key tables in computers. This process is carried out regularly by CCGDK 1, using public keys-permutations. Furthermore, as it is noted above, a partial replacement of contents of the gamma-generating table columns 88-1, 88-2, ..., 88-n is carried out during the information exchange between users A and B with the use of public keys when implementing the system function of modifying the external (internal) key table. At that, contents of the permutation cyclic register 90 are also replaced.

In the second case, generating N sequences of gamma for the code blocks is carried out by encoding the initial gamma obtained by the "dispersion and substitution" technique. To that end, the bank of registers 88-1, 88-2, ..., 88-n of the gamma-generating table columns, each having n=128 256-byte columns, is used. Said bank is applied to obtain each of N=64 gamma units. As distinct from generating code blocks which is performed row-wise using all N columns, generating N=64 gamma blocks is implemented by column-wise encoding of the initial gamma. At that, the columns with number j and (j+1) are used to generate j-th gamma, thereby constituting the "dispersion and substitution table". To generate gamma for the next unit j (j=1, N), the initial gamma accesses j-th column and finds therein the identical combination $U_{ji}$ for each byte $U_{ji}$ of gamma $U_j$.

Then code $U_{ji}$ is replaced with $U_{j+l,i}$ ($U_{ji} \rightarrow U_{j+l,i}$) code.

Encoding and replacing the 64-byte initial gamma is carried out over the entire length of the columns equal to 256 bytes ("dispersion" of 64 bytes over 256 bytes with their subsequent replacement with the next column codes). In the mod 2 adder 82 of the stochastic encoder 15 each obtained gamma with number j=(1 - 64) is added to the next j-th block from the bank of registers 79-1, 79-2, ..., 79-n of the multi-alphabet encoder columns.

Thus, using the gamma-generating circuit 84 the stochastic encoder 15 provides stochastic encoding and gamma-processing of a sequence of transmitted blocks in the single-use key mode. In the beginning of the generated sequence variable values of polynomials and of the initial combinations of recurrent registers 83, 92, each having length of 16 bytes, are transmitted. It is noted, that variable values of polynomials of recurrent registers 83, 92 are generated in the security processing control unit 21, 30.

These combinations are included into a service block, which is transmitted in the beginning of a sequence consisting of N information blocks in the secure mode. For encryption of the service unit, the secret permutation generated in the security processing control unit (21, 30) is applied. Said permutation is computed on the basis of the public key combination used for the next modification of the secret external (internal) key tables of the stochastic encoder 15.

After decryption the service block is used to configure registers of the stochastic decoder 14, that has the identical external (internal) key table and correspondingly provides correct decoding of all N blocks supplied to the code block input register. At that, the reverse table of the input permutation used in the stochastic encoder 15 is written in the permutation output register table.

The above-discussed functions of generating, encrypting and decrypting a service block are also used when stochastic re-encoding devices 23, 24, 27, 28 and 29 are used for the data transmission and processing. These functions are implemented in the secure processing control units 21, 30 of the user device 2 and distributed processing server 3 with the use of the appropriate public keys.

It is noted, that the single-use key mode in the stochastic encoder 15 can be implemented without applying the gamma-processing function. In such a case, in the stochastic encoder 15 (stochastic decoder 14) the process of data transformation is carried out with turning off the gamma generation circuit 84 on signal from the control unit 87 (Fig.9). At that, the code block symbols, generated in the bank of registers 79-1, 79-2, ..., 79-n of the multi-alphabet encoder columns, are supplied unchanged into the output register 86 of the code block via the mod 2 adder 85.

The above-described gamma-generating circuit is also used in stochastic re-encoding devices 23, 24 of the user device 2 and in stochastic re-encoding devices 25, 27, 29 of distributed processing server 3.

Thus, to protect data during transmission through a computer network between the user device 2 (user A) and distributed processing server 3 (user B), as well as during intra-computer exchange, the "single-use key" mode is implemented, according to which each code block of the transmitted sequence is encoded by its own key. Each key is unique for plurality of transmitted blocks. To ensure a predefined security level during the data transmission the above-described system function of modifying the external (internal) key table is implemented in said stochastic encoders (decoders) 14, 15 and stochastic re-encoding devices (23, 24, 25, 27, 29).

In the process of the said function implementation, when the data transmission takes place the period of modifying the key tables can be reduced up to transition to the mode of applying single-use external (internal) key tables. This mode, characterized by the maximum security level, involves transmission of a new public key after each next code block. According to this key, in a stochastic encoder (decoder) in accordance with the above-describe algorithm the new random combination is written into the permutation cyclic registers 81, 90 and the permutation input (output) register 78, and a random combination of one of the columns of the bank of registers 88-1, 88-2, ..., 88-n of the gamma-generating table columns is replaced. It is the random combination, which is used together with other t randomly selected combinations of the bank of registers of the gamma-generating table columns 88-1, 88-2, ..., 88-n to form gamma for the next code block on signal from the control unit 95. Thus, in this mode, similarly to the classic single-use key scheme, a single-use random combination of length N is used to encrypt each next block of length N. To encode each next block a single-use randomly generated multi-alphabet encoder is used.

A stochastic re-encoding device (Figs.11A, 11B)

Stochastic re-encoding devices (23, 24 in Fig. 3; 27, 28, 29 in Fig.4) comprised by the user device 2 and distributed processing server 3 are very important for creation of a unified security loop for the data transmission and processing. Said devices implement additional encryption of secure information for its adaptation to transmission in the computer environment and through the computer system, and also to various types of processing by stochastic transformation without opening the data contents.

These devices have a unified structure (Figs. 11A, 11B), but in terms of the functional purpose they are classified into three types: "internal code - external code", "external code - internal code" and "internal code 1 - internal code 2". The basis of said devices is constituted by elements of first stage and second stage of stochastic transformation 98, 101, the elements having the identical structure practically coinciding with the structure of stochastic encoder 15. It is noted, that the first stochastic transformation stage 98, if necessary, is capable of performing the stochastic decoder functions, and the second stochastic transformation stage 101 can be used in the stochastic encoder mode.

A stochastic re-encoding device of the "internal code - external code" type provides the possibility of transmitting the information, encoded by the internal code, through the computer system after establishment of the secure connection between the user device 2 and distributed processing server 3.

Re-encoding of the transmitted information takes place without opening its contents. To perform this function, in accordance with a public key and a service combination comprising a polynomial and a recurrent register value the first stochastic transformation stage 98 is configured for processing of the first one ofN code blocks supplied from the internal encoder via computer buses. The bank of registers 79-1, 79-2, ..., 79-n of the multi-alphabet encoder columns and the bank of registers 88-1, 88-2, ..., 88-n of the gamma-generating table columns of the first stochastic transformation stage 98 are filled on the basis of the internal key table similarly to the internal stochastic encoder 15. The random combination, computed in the above-mentioned manner in the secure processing control unit 30, is written into the permutation cyclic register 81, the permutation register 99 and the gamma-generating circuit 84. The second stochastic transformation stage 101 is configured using the external key table similarly to the external stochastic encoder 74 to provide the symmetric secure communication with distributed processing server 3. To connect and match the first stochastic transformation stage 98 to the second stochastic transformation stage 101, the secure processing control unit 21 of the user device 2 generates relative permutations and writes them into the permutation register 100 via the control unit 87. Performing the encoder functions, the second stochastic transformation stage 101 in the above-discussed manner enters the secure transmission symmetric mode with the first stochastic transformation stage 98 of stochastic re-encoding device 25 of distributed processing server 3. Thereby, the system function of modifying the external key table by a periodically transmitted public key in stochastic re-encoding device 24, 25 is implemented.

Transformation of each next code block from an input register, starting from the first one, is carried out in a symbol-wise manner. For that purpose, in the first stochastic transformation stage 98 and in the second stochastic transformation stage 101 the column registers of the bank of registers 79-1, 79-2, ..., 79-n of columns used for encoding the first code block symbol are enabled on signal from the control unit 87. Then, in the gamma-generating circuit 84 a relevant random sequence is generated for each code block and a first symbol used for gamma-processing of the first symbol of the code block is selected in the sequence. This symbol is mod 2 added to each symbol of the column register of the bank of registers 79-1, 79-2, ..., 79-n of multi-alphabet encoder columns of the first stochastic transformation stage 98, the encoder has been used for encoding the first code block symbol in the internal stochastic encoder 15. The same adding is carried out using the first symbol of gamma and symbols of the column register of the bank of registers 79-1, 79-2, ..., 79-n of the multi-alphabet encoder columns in the second stochastic transformation stage 101, the encoder has been enabled for encoding the first symbol of the code block of the external code. Thereafter, in the first stochastic transformation stage 98 the first symbol of the received code block of the internal code is compared with each symbol of the enabled column register of the bank of registers 79-1, 79-2, ..., 79-n of the multi-alphabet encoder columns. When one of the compared values coincides with the first symbol of the code block, then said symbol is considered as identified (the register column row having the code identical to the first symbol of the code block is determined). In this case, the control unit 87, via key 108 and permutation register 99, 100, provides transmission of that symbol through a corresponding bus to the column register of the fist symbol of the external code of the bank of registers 79-1, 79-2, ..., 79-n of the multi-alphabet encoder columns of the second stochastic transformation stage 101. As a result, the first symbol of the code block of the internal code is replaced with the first gamma-processed symbol of the external code (without removing gamma from said symbol and without decoding). Then, the same re-encoding procedure is carried out for each next symbol of the code block of the internal code until the code block of the external code comprising identical information in a secure format is generated. As follows from the description of this procedure, re-encoding is implemented without opening the secure information. The re-encoded code block on signal from the control unit 87, via key 108, is written into the output register 102 of the code block of the second stochastic transformation stage 101. As a result, symbols of the first code block are replaced. After said replacement, control units 87 carry out the necessary change of a combination in the recurrent registers 83 and in the permutation cyclic registers 81, thus preparing the first and second stages 98, 101 of a stochastic transformation for re-encoding the next code block. Then the next code block is re-encoded and written into the output register 102 of the code block. After the entire sequence ofN code blocks of the external code is written into the output register 102, the service block with the initial combination along with polynomials of the recurrent register 83, 92, is written in the beginning, and the secure sequence of code blocks is transmitted through the computer system to distributed processing server 3.

As it is noted above, the second stochastic transformation stage 101 can perform the stochastic encoder functions, if necessary. In this case, the control unit 87 disables the first stochastic transformation stage 98, the permutation input table is written into the permutation register 100 of the second stochastic transformation stage 101, and all the elements of the second stochastic transformation stage 101 are transferred to the mode of the stochastic encoder operation. Thus, the first type of a stochastic re-encoding device, "internal code - external code", is implemented for transmission by the user device 2.

For reception in distributed processing server 3 the second type of a stochastic re-encoding device, "external code - internal code", is applied. This stochastic re-encoding device 28 in the above-discussed manner transforms code blocks of the external code into code blocks of the internal code without opening contents of the information. To perform said function, the first stochastic transformation stage 98 is configured in accordance with the service combination, comprising a polynomial and a value of recurrent registers 83, 90, to process the first of N code blocks supplied to the transceiving unit 31 of distributed processing server 3. At that, the bank of registers 79-1, 79-2, ..., 79-n of the multi-alphabet encoder columns and the bank of registers 88-1, 88-2, ..., 88-n of the gamma-generating table columns of the first stochastic transformation stage 98 are filled on the basis of the external key table. Using the internal key table, the second stochastic transformation stage 101 is configured as the internal stochastic encoder 15 to provide the symmetric secure data transmission in the environment of distributed processing server 3. To connect and match the first stochastic transformation stage 98 to the second stochastic transformation stage 101, the secure processing control unit 21 of the user device 2 generates the appropriate relative permutations, which are written into the permutation registers 99 via the control unit 87. After that, re-encoding of each next received code block, starting from the first one, is implemented in a symbol-wise manner according to the procedure discussed above. The transformed code blocks are written into the memory of the datalogical secure computing system 35 of distributed processing server 3 via the secure processing control unit 30.

In the process of transmitting a message user A (user device 2) is capable of the above-described implementation of the system function of modifying the external key tables on the basis of random combinations received from the random number generator 53, via the combination selector 54 of the secret key table generating subsystem 25 (Fig.6), using the public key computed in the secure processing control unit 21. Thereby, a periodic replacement of contents of the permutation cyclic register 81, 90, the permutation registers 100, 99 of stochastic re-encoding devices 24, 25, as well as replacement of a predetermined number of combinations of the bank of registers 79-1, 79-2, ..., 79-n of columns and the bank of registers 88-1, 88-2, ..., 88-n of the gamma-generating table of the gamma-generating circuit 84, is ensured. To generate a public key the above-discussed preceding combinations written into the permutation cyclic register 81, 90 and the combination newly received from the random number generator 53 are used. For that purpose, an algorithm for computing the public key with logical conclusion on transitive relationships of the permutation tables, as implemented in the public key generating subsystem 8 (Fig.7), is used. In the secure processing control unit 30 of user B a new secret permutation is computed on the basis of the received public key using the logical conclusion and preceding tables of the permutation cyclic register 81. Thereafter, the synchronous transition to the new random combination of the permutation cyclic register 81, 90, the permutation register 100, 99 in stochastic re-encoding device 24 of user A and in stochastic re-encoding device 25 of user B is carried out.

As it is illustrated above, a partial replacement of columns of the external key tables in stochastic re-encoding device 24 of user A and in stochastic re-encoding device 28 of user B (distributed processing server 3) can be implemented in a similar way. Thereby a synchronous replacement of contents of the column registers of the bank of registers 79-1, 79-2, ..., 79-n of multi-alphabet encoder columns and of the bank of registers 88-1, 88-2, ..., 88-n of the gamma-generating table columns of the second stochastic transformation stage 101 of the user device 2 and of the first stochastic transformation stage 98 of distributed processing server 3, respectively, is provided.

After the symbol-wise transformation of the received sequence of N code blocks performed in the stochastic transformation device of distributed processing server 3, the received message, being protected by the internal code, is written into the memory of the datalogical secure computing system 35 of distributed processing server 3 via the secure processing control unit 30.

Thus, for protecting the information in the context of transmission in the computer environment, as well as in the context of the external secure exchange, the concept of the "single-use key" is implemented. According to this concept, each code block of a sequence in a stochastic re-encoding device is encoded by its own key. Said key is unique on plurality of N transmitted blocks, and the tables of secret keys and permutations are periodically modified using public keys in the course of implementation of the system function of raising the security level of information transmitted.

Upon completion of a secure communication session between users A and B, the symmetric external key table (by permission from CCGDK 1) can be used as the basis for generating a new external key table when establishing a next secure symmetric communication session. To generate the new symmetric external key table columns and rows of the preceding external key table are permutated at users A and B. For that purpose, the above-discussed algorithm for computing public keys is applied in the secure processing control units 21, 30 and the algorithm for modifying the external key table is applied in the secret key table generating subsystem 13, 25 of the user device 2 and distributed processing server 3.

The process of encrypting the secure e-mail address table 37, the secure data tables 39 and secure web-pages 38 is implemented using stochastic re-encoding internal device 29, which refers to the third type, "internal stochastic code 1 - internal stochastic code 2". This device is connected to the secure processing control unit 30 and the datalogical secure computing system 35. Said device is used in the mode of an internal stochastic encoder.

In the process of encrypting the secure e-mail address table 37 elements of each table row are considered as a sequence of N code blocks. As a result, after the encryption executed by the secure processing control unit 30 and the datalogical secure computing system 35 each row comprises (N+1) fields. The first field is a service field, including encrypted initial combinations and polynomials of recurrent registers 83, 92, which have been used when encoding the given row. At that, a separate table of public keys, random n-byte combinations, is generated. Said combinations have been used for modifying the internal key table when encoding each of the rows of the secure e-mail address table 37. They have been also used for encrypting said combinations of the service field. At that, a number of each combination of the public key table corresponds to the row number of the secure e-mail address table 37, in encoding of which said row has been used.

The secure data tables 39 have the same structure.

When encrypting the secure web-pages 38 each of them is transformed to plurality of sequences of N code blocks. In the beginning of each sequence of N code blocks the corresponding public key, used for modifying the internal key table when encoding this sequence of code blocks, is written. In the beginning of the encrypted web-page the encrypted service block, comprising an initial combination and a polynomial of the recurrent register, is written. Decryption of the service blocks (service fields of the tables) is carried out using the corresponding public keys in the secure processing control unit 30 prior to implementing the predetermined functions of the secure information processing.

If the secure processing control unit 30 determines, that the received encrypted message is an e-mail message, then only the encoded address portion of the message will be processed. The purpose of the processing consists in determining the address of distributed processing server 3, whereto the encrypted e-mail message is to be sent. For that purpose, a corresponding row must be found in the secure e-mail address table 37. The row must contain the encoded address of user device 2 and address of distributed processing server 3, whereto the message is to be sent. Said procedure is carried out using the internal stochastic re-encoding device 29 connected to the secure processing control unit 30 and the datalogical secure computing system 35. As a result, recipient's address will be re-encoded without opening its contents to the code that protects recipient's address of the table first row. Thereafter, the received code and encoded address of the table first row are read into the datalogical secure computing system 35 for comparison. When the compared values from the table coincide, the field comprising the address code of distributed processing server 3, whereto the received encrypted message is to be sent, is read out. Then for transmission to the selected distributed processing server 3 in the secure format, the encoded e-mail message from the datalogical secure computing system 35 is provided to the secure processing control unit 30, and afterwards to the stochastic re-encoding device 28 of the transceiving unit 26 of the stochastic transformation.

If the compared encoded values of addresses do not coincide, then the internal device 29 of the stochastic re-encoding transforms the message address code to the code, by which the address of the second row of the secure e-mail address table 37 is encoded, so that to search the required address in a secure form, etc. The search continues until the required address for sending the message is found.

If the secure processing control unit 30 determines on the basis of the message format that the type of processing of the received encoded information refers to arithmetic computations, then encrypted operands and codes of arithmetic computations will be delivered to the datalogical secure computing system 35. At that, on signal form the secure processing control unit 30 the first stochastic transformation stage 98 of stochastic re-encoding device 29 is configured to the internal code, by which the received message is protected. Simultaneously, the second stochastic transformation stage 101 in co-operation with the datalogical secure computing system 35 is matched with the code table of the secure arithmetic processor 34. For that purpose, instead of the initial numeric code contents of one of the column registers of the bank of registers 79-1, 79-2, ..., 79-n of the multi-alphabet encoder columns of the second stochastic transformation stage 101 are written in the entry column of the code table of arithmetic processor 34. The second exit column of the code table of the secure arithmetic processor 34 contains stochastic indices of numeric data used for computations in the secure mode. During re-encoding of the sequence of code blocks of the received message in the second stochastic transformation stage 101 only one selected register will be permanently enabled on signal from the control unit 87. For this reason, the received secure numeric information will be re-encoded to the input code of the secure arithmetic processor 34, and on commands from the datalogical secure computing system 35 said numeric information will be provided to the secure arithmetic processor 34 via the code table for implementing the computations specified. The data obtained by the computations are supplied in the secure form via the output code table for re-encoding from the stochastic indices of the secure arithmetic processor 34 to the internal stochastic code. For that purpose, on signal from the secure processing control unit 30 contents of one of the column registers of the multi-alphabet encoder of the stochastic code indexing unit is written into the exit column of the reverse code table, whose entry column comprises indices of numeric data. During re-encoding of a sequence of code blocks of the obtained result in the first stochastic transformation stage 98, on signal from the control unit 87 only one selected register will enabled permanently. Therefore, the obtained secure numeric information will be re-encoded into the stochastic internal code and provided, on commands from the secure processing control unit 30, to stochastic re-encoding device 27 of the "internal code - external code" type for transmission to the user device 2 in the secure form.

If the secure processing control unit 30 determines on the basis of the message format, that the type of processing of the received encoded information refers to searching and retrieving the required information from the secure data tables 39 by the query condition, the datalogical secure computing system 35 is connected. Said system receives the encrypted information that may comprise: titles of tables, their entries or fields, numeric parameters (to which the retrieved data must correspond), codes of arithmetic computations (which must be carried out with the selected numeric fields).

When processing the query, the sequence of code blocks comprising encrypted table titles, which have in their beginning the encrypted combinations and polynomials of the internal code recurrent register, is read out into the datalogical secure computing system 35 from secure database 36. Then, the corresponding public keys are supplied thereto. Thereafter, by applying the above-discussed procedures of re-encoding and comparing information in the secure form, retrieval is implemented from the encrypted sequence of codes of the tables required for processing a query from the user device 2. At that, in the first 98 and second 101 stages of stochastic transformation each code with a table title is alternately re-encoded, using the corresponding combinations of recurrent registers, to the secure database 36 internal code, by which each title of the secure data tables 39 is encrypted. When the compared values coincide, the required secure tables 39 of data are read out according to their code from secure database 36 to the datalogical secure computing system 35 for further processing.

In processing, the circumstance that each entry (row) of the secure data tables 39 contains a sequence of code blocks is taken into account. Each code block corresponds to a certain field whose code is comprised by the table title. The service field has a combination of the recurrent register for the table title and each of its entries. Using the corresponding combinations of the recurrent registers, stochastic re-encoding device 29 transforms the field codes, submitted in the query, to the internal code, by which the field codes in the table title are encrypted, and compares them. When the compared values coincide, the code blocks of the fields submitted in the query are retrieved from the table entries.

If it is necessity to retrieve any particular data or parameters of numeric fields in the encrypted form from a table according to the query codes, then the query codes are re-encoded to the internal code of each entry to retrieve the required secure data by comparing them with the query codes. This step is carried out according to the above-discussed procedure using combinations of recurrent registers in the service fields of entries. If "more" or "less" arithmetic operands, implemented by subtracting the secure numbers, are used in comparison of numeric parameters, or if arithmetic computations with the selected fields in the encrypted form are required, then the secure arithmetic processor joins the processing. At that, computations with secure information are carried out according to the above-described procedure. Upon completion of the query processing, in the stochastic re-encoding device 29 the encoded data retrieved from secure tables 39 or the obtained results of computations are transferred to the internal code of distributed processing server 3 and supplied to the user device 2 in the above-discussed manner.

If the secure processing control unit 30 determines on the basis of the message format, that the type of processing of the received encoded information refers to searching and retrieving the secure web-pages 38 by the query condition, the datalogical secure computing system 35 is connected. At that, two search levels are implemented: the first level - according to headers of the secure web-pages 38; the second level - according to their contents. Therefore, two internal stochastic codes are used when encoding the secure web-pages 38: the first code - for encoding a header, the second code - for protecting contents of the page itself. At that, a service block with the recurrent register combination is located in the beginning of each code sequence. The received secure message with the query conditions has a set of keyword codes that must be contained in a document requested.

When searching on the first level, keyword codes are provided to stochastic re-encoding device 29 and transformed to the internal code of the next secure web-page 38 header. At that, code of each keyword is alternately compared with each code block of the header. When the compared codes do not coincide, the encoded basis of a word is extracted from them by discarding code symbols of the word end, and the resulting codes are compared again. When the compared values coincide, the presence of a given keyword in the header is determined. When the keyword codes do not coincide with the header codes, the next web-page is accessed, etc. Encoded headers of the secure web-pages 38, selected during the search, are transformed to the external code of distributed processing server 3 in stochastic re-encoding device 27 and transmitted to the user device 2 through the computer system. Therein, after reception of the code blocks, they are re-encoded into the internal code, transmitted through the computer buses to the internal stochastic decoder 14, and the requested information is displayed on the monitor screen in the public form. When selecting a particular web-page, a user enters a query for retrieving it from the distributed data processing server 3. After implementing the above-mentioned functions of stochastic coding and re-encoding the query in the user device 2, secure information is transmitted through the computer system. As a result, the query is supplied to distributed processing server 3, wherein the functions of re-encoding the query, selecting the required secure web-page 38 and transmitting to the user device 2 are carried out.

If the first-level search of the required web-page fails, then, by the user query, keywords can be searched directly within the text of secure web-pages 38, whose header contains at least one keyword from the query. At that, the above-discussed procedure of re-encoding keywords and comparing them with codes of the text words and codes of the word bases is applied. In the presence of a certain number of coincidences of each keyword from the query with the text codes, it is considered that a given secure web-page 38 complies with the query conditions, and the page is transmitted to the user device 2 in the encrypted form, using the re-encoding functions.

Industrial Applicability

The method and system claimed are suitable to be extensively employed in computer systems that use the distributed processing of confidential information. These systems include modem banking and payment systems, secure e-mail systems, corporate networks, and other similar systems.

**Claims**

**1.** A method for integrated protection of distributed data processing in a computer system including at least one user device, at least one distributed data processing server and a center for certification, generation and distribution of keys, comprising steps of

   providing access to the computer system at each user device and distributed data processing server, and generating a system of internal and external keys based on secret key tables, received from the center for certification, generation and distribution of keys;
   generating, in the user device and the distributed data processing server, based on the mentioned secret key tables, secret internal single-use keys for symmetric encryption when transmitting, storing and processing data in the encrypted form in an environment of the user device and the distributed data processing server;
encrypting data entered and transmitted in the environment of the user device and the distributed data processing server, which data to be processed are stochastic encoded using the mentioned secret internal single-use keys;
sending, from the user device to the center for certification, generation and distribution of keys, a request for establishing a connection to a selected distributed data processing server to perform a specified processing function;
receiving from the center for certification, generation and distribution of keys or generating in the user device and distributed data processing server, public keys for updating the secret key tables to perform the stochastic encoding of data transmitted from the user device to the distributed data processing server, and processing the transformed data and outputting the result from the server to the user device;
generating in the user device and the distributed data processing server, based on the public keys and the secret key tables, secret external single-use keys for symmetric encryption, and modifying the secret key tables when transmitting data and processing it in the encrypted form;
encrypting the data to be transmitted by stochastic encoding in the user device using the secret external symmetric single-use keys;
transmitting the stochastic encoded data to the distributed data processing server;
receiving the stochastically encoded data in the distributed data processing server, processing the received data in the encrypted form after an additional encryption using the secret internal single-use symmetric keys according to a processing type as defined by the data format, and stochastically encoding the additionally encrypted data using the secret external symmetric single-use keys;
transmitting the stochastically encoded encrypted data to the user device;
receiving the stochastically encoded encrypted data in the user device and decoding the received data for outputting the data to the user in the public form.

**2.** The method according to claim 1, wherein access to the computer system and generation of the internal and external keys are performed by entering into the user device a data medium with recorded PIN-code, password, value of password hash function, initial key table and data of secret permutations of columns and rows to obtain a secret basic key table and a secret external key table.

3. The method according to claim 2, wherein the system of internal and external keys is generated as a set of secret basic and external key tables generated by secret permutations of columns and rows of the initial key table.

4. The method according to claim 3, wherein tables of secret symmetric internal single-use keys for transmitting data separately in the environment of the user device and distributed data processing server, and for encrypting the processed data, including tables of a database, web-pages and e-mail address table of the server, are generated by secret permutations of columns and rows of the basic key tables.

5. The method according to claim 1, further comprising generating, in the center for certification, generation and distribution of keys, the user device and the distributed data processing server, public keys in the form of tables of relative permutations by logical conclusion on a set of tables of secret permutations, using transitive relations between row elements, for the user device and the distributed data processing server, to render symmetric their secret external key tables and modify the secret key tables.

6. The method according to claim 5, wherein the secret external key tables of the user device and distributed data processing server are rendered symmetric, and the secret key tables for distributed processing of the encrypted information are modified by permutations and substitutions of columns and rows of said secret key tables by using public keys.

7. The method according to claim 5, wherein said single-use keys are generated by stochastically changing random elements of symmetric external and internal key tables for each transmitted stochastic encoded data.

8. The method according to claim 5, further comprising, during the encryption and transmission of the encrypted information, modifying periodically, at the user device and distributed data processing server, symmetric external and internal key tables by using public keys generated and transmitted by the user device and distributed data processing server.

9. The method according to claim 1, further comprising processing the encrypted data by executing predetermined programs, in a secure stochastically transformed form, in a datalogical secure computing device using a secure arithmetic processor;

matching, via data buses, an interface of said processor with the secret internal key table; and sending, via control buses, instructions from the datalogical secure computing device.

10. The method according to claim 9, further comprising, before and after the stochastic transformation of each entered program, antivirus protecting, in the datalogical secure computing device, based on the detection, using logical conclusion on a plurality of program instruction codes, of virus signatures as strings of logically-associated instruction codes and destructing detected virus signatures.

11. The method according claim 1, further comprising, when a processing type is defined as arithmetic computations by the data format, selecting encrypted operands and arithmetic computation codes, and transmitting them to a secure arithmetic processor to carry out required computations in an encrypted form.

12. The method according to claim 1, further comprising, when a processing type is defined as search and retrieval of the required data from the encrypted database tables by the query condition, selecting encrypted data in the query condition in the received data format, and, by comparing based on the selected encrypted data, after additional encryption, selecting, as required for the data retrieval, fields of encrypted tables.

13. The method according to claim 12, wherein said retrieval of data fields of encrypted tables includes checking, in a secure arithmetic processor, the retrieved data fields of encrypted tables in the case of compliance with required encrypted numeric parameters, or arithmetic computation procedures.

14. The method according to claim 1, further comprising, when a processing type is defined as search and retrieval of encrypted web-pages, additionally encrypting keywords of the encrypted query, and determining, by comparing based on additionally encrypted query keywords, the presence of identical keywords in each encrypted web-page of the distributed data processing server.

15. The method according to claim 1, further comprising, when processing type is defined as an e-mail transmission, additionally encrypting a received encrypted message, and determining, by comparing an encrypted mail recipient's address in the additionally encrypted e-mail message with addresses of the servers, the server containing the recipient's mail box to which to transmit the encrypted e-mail message.

16. The method according to claim 1, further comprising generating a value of a hash function of the transmitted data, providing and transmitting the data sender's electronic digital signature, verifying the sender's authenticity and checking the received data integrity; wherein the value a of hash function of the transmitted data is generated as a random pattern of a predetermined length by adding stochastically encoded data blocks in a secure arithmetic processor at the user device and the distributed data processing server.

17. The method according to claim 16, wherein providing the electronic digital signature comprises generating sender's secret personal key by random row permutations of the secret external key table and computing the public key, which key is sent to the center for certification, generation and distribution of keys in order to register the personal key.

18. The method according to claim 17, wherein, when verifying the sender's authenticity and checking the received data integrity using the value of a hash function of the transmitted data and the electronic digital signature, the secret personal key is used to encrypt the value of a hash function of the transmitted data hash function; and the public key is used to decrypt the received value of hash function for comparison with the value generated in the distributed data processing server.

19. A system for protection of distributed data processing, comprising

a center for certification, generation and distribution of keys;
at least one user device; and
at least one distributed data processing server;
wherein the center for certification, generation and distribution of keys comprises a user certifying subsystem, a secret key table generating subsystem, a datalogical secure computing system, a subsystem for providing data media for certified users, a public key generating subsystem, an authentication and data integrity checking subsystem, a secure arithmetic processor, a key distributing subsystem and a secure processing control unit;
each user device comprises a secret key table generating subsystem, an internal stochastic decoder, an internal stochastic encoder, a secure access subsystem, a secure arithmetic processor, a datalogical secure computing system, a secure processing control unit and a stochastic transformation transceiving unit;
the distributed data processing server comprises a secret key table generating subsystem, a stochastic transformation transceiving unit, an internal stochastic re-encoding device, a secure processing control unit, a secure access subsystem, a secure arithmetic processor, a datalogical secure computing system and a secure database;
in the center for certification, generation and distribution of keys: the datalogical secure computing system is connected to the user certifying subsystem, the secret key table generating subsystem, to which the user certifying subsystem is connected, and also to the secure arithmetic processor, the public key generating subsystem, the subsystem for providing data media for certified users and to the key distributing subsystem, in turn connected to the secure processing control unit, in turn connected to the authentication and data integrity checking subsystem;
in the user device: the datalogical secure computing system is connected to the secure arithmetic processor, the internal stochastic encoder, the internal stochastic decoder and the stochastic transformation transceiving unit; the secure access subsystem is connected to the secure processing control unit, in turn connected to the internal stochastic encoder, the internal stochastic decoder, the stochastic transformation transceiving unit, the secret key table generating subsystem and the datalogical secure computing system;
in the distributed data processing server: the datalogical secure computing system is connected to the secure arithmetic processor, the secure database, the internal stochastic re-encoding device and the secure processing control unit, in turn connected to the stochastic transformation transceiving unit, the internal stochastic re-encoding device, the secret key table generating subsystem and the secure access subsystem;

wherein the key distributing subsystem of the center for certification, generation and distribution of keys is connected, respectively, to the secret key table generating subsystem of the user device and the distributed data processing server.

20. The system according to claim 19, wherein the secure access subsystem of the user device comprises a subsystem for entering data from a data medium, which subsystem is connected to the authentication and data integrity checking subsystem, which is connected to the secure processing control unit of the user device.

21. The system according to claim 19, wherein the stochastic transformation transceiving unit of the user device comprises the first and second devices for stochastic re-encoding, wherein the first stochastic re-encoding device is included into a data transmission path from the distributed data processing server to the datalogical secure computing system of the user device, and the second stochastic re-encoding device is included into a data reception path from the datalogical secure computing system of the used device to the distributed data processing server.

22. The system according to claims 19, wherein the stochastic transformation transceiving unit of the distributed data processing server comprises the first and second stochastic re-encoding devices, wherein the first stochastic re-encoding device is included into a data transmission path from the secure processing control unit of the distributed data processing server to the stochastic transformation transceiving unit of the user device, and the second stochastic transformation device is included into a data reception path from the stochastic transformation transceiving unit of the user device.

23. The system according to claim 19, wherein the secure access subsystem of the distributed data processing server further comprises subsystem for data inputting from a data medium, which subsystem is connected to the authentication and data integrity checking subsystem, which in turn is connected to the secure processing unit of the distributed data processing server.

24. The system according to claim 19, wherein the secure database of the distributed data processing server includes a secure e-mail address table, a secure set of web-pages and secure data tables.

25. A public key generating subsystem for a system for protection of distributed data processing, comprising:

a memory for storing tables of secret column and row permutations in a secret key table;
a memory for storing a table of symmetric column and row permutations in an internal key table;
a register of a transitive relation sequence between rows of said tables of secret permutations;
a unit logical conclusion on the transitive relation sequence;
a memory for storing a table of relative non-secret column and row permutations in a external key table;
a public key register;
an input switching unit for initial data inputting;
an output switching unit for public key outputting; and

a control unit;

wherein outputs of the control unit are connected to inputs of the memory for storing tables of secret column and row permutations in secret key tables, the memory for storing the table of symmetric column and row permutations of the internal key table, the register of the transitive relation sequence between rows of said tables of secret permutations, the public key register, the input and output switching units, and the unit of logical conclusion on the transitive relation sequence, which unit of logical conclusion in turn is connected by its second and third inputs, respectively, to outputs of the memory for storing the table of symmetric column and row permutations of the external key table, and to outputs of the register of the transitive relation sequence between rows of said tables of secret permutations, and connected by its output to an input of the memory for storing the table of relative non-secret column and row permutations in the external key table, which memory is connected by its output to an input of the public key register, in turn connected by its output to an input of the output switching unit, in turn connected by another input to outputs of the memory for storing tables of secret column and row permutations of secret key tables, which memory is connected by its input to an output of the input switching unit; the second outputs of the input and output switching units are connected to an input of the control unit.

26. A stochastic encoder for a system for protection of distributed data processing, comprising:

an input permutation register for inputting data to be encoded;
a bank of registers of the multi-alphabet encoder columns, which bank is connected by its first input to an output of the input permutation register;
a column-connecting circuit connected by its outputs to the second inputs of said bank of registers;
a cyclic permutation register connected by its outputs to corresponding inputs of the column-connecting circuit;
a bank of keys-invertors connected by its outputs to the corresponding inputs of the cyclic permutation register;
a recurrent register connected by its outputs to the corresponding inputs of the bank of keys-inverters;
a gamma-generating circuit;
a mod 2 adder connected by its inputs, respectively, to outputs of said bank of registers and outputs of the gamma-generating circuit, and connected by its output to an input of a code block output register for outputting encoded data; and

a control unit connected by its outputs to inputs, respectively, of the input permutation register, the bank of registers of the multi-alphabet encoder columns, the column-connecting circuit, the cyclic permutation register, the bank of keys-inverters, the recurrent register, the gamma-generating circuit, the mod 2 adder, and the code block output register; the control unit is connected by its input to an additional output of the recurrent register and has an additional input and output for connection with other control units of the system for protection of distributed data processing.

**27.** The stochastic encoder according to claim 26, wherein gamma-generating circuit comprises:

a bank of registers of the gamma-generating table columns;

a column-connecting circuit connected by its outputs to inputs of said bank of registers;

a cyclic permutation register connected by its outputs to corresponding inputs of the column-connecting circuit;

a bank of keys-inverters, which bank is connected by its outputs to the corresponding inputs of the cyclic permutation register;

a recurrent register connected by its outputs to corresponding inputs of the bank of keys-inverters;

an initial gamma register;

a mod 2 adder;

a key connected by its input to an output of said bank of registers, and connected by its first and second outputs, respectively, to an input of said mod 2 adder, and to an input of the mod 2 adder of the stochastic encoder; and

a control unit connected by its outputs to inputs, respectively, of the recurrent register, the bank of keys-inverters, the cyclic permutation register, the column-connecting circuit, said bank of registers, the key, said mod 2 adder, the gamma-generating circuit, and the initial gamma register, which is connected by its output to the input of said control unit in turn connected by its second input to an additional output of the recurrent register and by its third input to a corresponding output of the control unit of the stochastic encoder.

**28.** A stochastic re-encoding device for a system for protection of distributed data processing, comprising:

an input code block register;

a first stochastic transformation stage connected by its input to an output of the input code block register;

a first permutation register connected by its first and second inputs, respectively, to the first and second outputs of the first stochastic transformation stage;

a second permutation register connected by its first inputs, respectively, to outputs of the first permutation register;

a second stochastic transformation stage connected by its input to an output of the second permutation register, and connected by its first output to a second input of the second permutation register; and

an output code block register connected by its input to a second output of the second stochastic transformation stage;

wherein each of said stochastic transformation stages comprises:

a bank of registers of the multi-alphabet encoder columns, wherein a first input of said bank of registers is an input of the corresponding stochastic transformation stage;

a column-connecting circuit connected by its outputs to second inputs of said bank of registers;

a cyclic permutation register connected by its outputs to corresponding inputs of the column-connecting circuit;

a bank of keys-inverters connected by its outputs to corresponding inputs of the cyclic permutation register;

a recurrent register connected by its outputs to corresponding inputs of the bank of keys-inverters;

a gamma-generating circuit;

a mod 2 adder connected by its first input, via a key, to an output of said bank of registers, and connected by its second input to an output of the gamma-generating circuit,

wherein a second output of said key is the second output of the corresponding stochastic transformation stage,

a control unit wherein a first output is the first output of the corresponding stochastic transformation stage, and the other outputs are connected, respectively, to inputs of said bank of registers, the column-connecting circuit, the cyclic permutation register, the bank of keys-inverters, the recurrent register in turn connected by an additional output to the corresponding input, respectively, of the control unit, the gamma-generating circuit, the mod 2 adder and the key; the control unit has additional input and

**EP 1 406 410 A1**

output for connection with other control units of the system for protection of distributed data processing.

CENTER FOR CERTIFICATION, GENERATION AND DISTRIBUTION OF KEYS 1

USER DEVICE 2

DISTRIBUTED DATA PROCESSING SERVER 3

FIG.1

FIG. 2

USER CERTIFYING SUBSYSTEM

4

SUBSYSTEM FOR GENERATING MEDIA FOR CERTIFIED USERS

7

SECRET KEY TABLE GENERATING SUBSYSTEM

5

PUBLIC KEY GENERATING SUBSYSTEM

8

DATALOGICAL SECURE COMPUTING SYSTEM

6

AUTHENTICATION AND DATA INTEGRITY CHECKING SUBSYSTEM

9

SECURE ARITHMETIC PROCESSOR

10

KEY DISTRIBUTING SUBSYSTEM

11

SECURE PROCESSING CONTROL UNIT

12

FROM/TO 2  FROM/TO 3

EP 1 406 410 A1

30

TRANSCEIVING UNIT OF STOCHASTIC TRANSFORMATION

FROM 3

STOCHASTIC RE-ENCODING DEVICE — 23

TO 3

STOCHASTIC RE-ENCODING DEVICE — 24

FROM/TO 1

SECRET KEY TABLE GENERATING SUBSYSTEM — 13

22

SECURE ARITHMETIC PROCESSOR — 19

DATALOGICAL SECURE COMPUTING SYSTEM — 20

SECURE PROCESSING CONTROL UNIT — 21

AUTHENTICATION AND DATA INTEGRITY CHECKING SUBSYSTEM — 18

16

INTERNAL STOCHASTIC DECODER — 14

INTERNAL STOCHASTIC ENCODER — 15

SECURE ACCESS SUBSYSTEM

SUBSYSTEM FOR INPUTING DATA FROM DATA MEDIA — 17

FIG. 3

FIG. 4

EP 1 406 410 A1

FROM/TO 6

FROM 4

SWITCHING UNIT

47

MEMORY FOR STORING A MAIN KEY TABLE

40

COLUMN PERMUTATION REGISTER

45

ROW PERMUTATION REGISTER

46

CONTROL UNIT

48

RANDOM NUMBER GENERATOR

43

COMBINATION SELECTOR

44

MEMORY FOR STORING INITIAL KEY TABLES

41

MEMORY FOR STORING KEY DISTRIBUTION TABLES

42

FIG.5

FIG.6

EP 1 406 410 A1

FROM 6 →

INPUT SWITCHING UNIT

67

MEMORY FOR STORING SECRET COLUMN AND ROW PERMUTATIONS OF SECRET KEY TABLES

61

REGISTER OF A TRANSITIVE RELATION SEQUENCE BETWEEN ROWS OF SECRET PERMUTATIONS TABLES

63

MEMORY FOR STORING A TABLE OF RELATIVE NON-SECRET PERMUTATIONS OF COLUMNS AND ROWS IN THE EXTERNAL KEY TABLE

65

66

PUBLIC KEY REGISTER

UNIT OF CONCLUSION ON THE TRANSITIVE RELATION SEQUENCE

64

OUTPUT SWITCHING UNIT

68

→ TO 6

MEMORY FOR STORING SUMMETRIC COLUMN AND ROW PERMUTATIONS OF THE EXTERNAL KEY TABLE

62

CONTROL UNIT

69

FIG. 7

FIG.8

FIG.9

EP 1 406 410 A1

FIG.10

BANK OF REGISTERS OF THE GAMMA
GENERATING TABLE COLUMNS

*88-1*    *88-2*    *88-n*

*93* INITIAL GAMMA REGISTER

*95* KEY

*94* MOD 2 ADDER

TO 85

*89* COLUMN CONNECTION CIRCUIT

*90* CYCLIC PERMUTATION REGISTER

BANK OF KEYS-INVERTERS

*91-1*    *91-2*    *91-n*

*92* RECURRENT REGISTER

CONTROL UNIT OF
THE GAMMA-
GENERATING
CIRCUIT

FROM 84

*96*

EP 1 406 410 A1

38

CODE BLOCK INPUT REGISTER  97

BANK OF REGISTERS OF MULTI-ALPHABET ENCODER

79-1  79-2  79-n

GAMMA-GENERATING CIRCUIT  84

MOD 2 ADDER  85

KEY  103

PERMUTATION REGISTER  99

COLUMN CONNECTION CIRCUIT  80

CYCLIC PERMUTATION REGISTER  81

BANK OF KEYS-INVERTERS  82-1  82-2  82-n

RECURRENT REGISTER  83

CONTROL UNIT  87

TO THE SECURE PROCESSING CONTROL UNIT

98

FIRST STAGE OF STOCHASTIC TRANSFORMATION

FIG.11A

39

FIG.11B

| TABLE OF DISTRIBUTION OF KEYS FOR USERS | | | | | | | | |
|---|---|---|---|---|---|---|---|---|
| No | NAME | ADDRESS PHONE | PASS PORT DATA | PASS WORD | VALUE OF HASH OF PASS WORD | PIN-CODE | KEY PERMU-TATION OF COLUMNS | KEY PERMU-TATION OF ROWS |

| COPY OF USER'S SMART-CARD | | | | | | |
|---|---|---|---|---|---|---|
| VALUE OF HASH OF PASSWORD | PIN-CODE | PERMUTATION OF COLUMNS FOR AN EXTERNAL KEY TABLE | PERMUTATION OF ROWS FOR AN EXTERNAL KEY TABLE | PERMUTATION OF COLUMNS FOR A BASIC KEY | PERMUTATION OF ROWS FOR A BASIC KEY | TABLE OF INITIAL KEY |

FIG.12

USER A

| | | | | | | | | | |
|---|---|---|---|---|---|---|---|---|---|
| 1 | 3 | 1 | 6 | 1 | 9 | 1 | 9 | 1 | 9 |
| 2 | 7 | 2 | 9 | 2 | 7 | 2 | 3 | 2 | 7 |
| 3 | 9 | 3 | 1 | 3 | 5 | 3 | 4 | 3 | 6 |
| 4 | 1 | 4 | 5 | 4 | 8 | 4 | 6 | 4 | 8 |
| 5 | 0 | 5 | 4 | 5 | 1 | 5 | 7 | 5 | 1 |
| 6 | 2 | 6 | 3 | 6 | 6 | 6 | 0 | 6 | 6 |
| 7 | 4 | 7 | 8 | 7 | 2 | 7 | 1 | 7 | 2 |
| 8 | 8 | 8 | 7 | 8 | 3 | 8 | 2 | 8 | 3 |
| 9 | 6 | 9 | 0 | 9 | 0 | 9 | 5 | 9 | 0 |
| 0 | 5 | 0 | 2 | 0 | 4 | 0 | 8 | 0 | 4 |
| PERMUTATION FOR A BASIC KEY | | PERMUTATION FOR AN EXTERNAL KEY | | RELATIVE PERMUTATION | | THE OBTAINED EXTERNAL SYMMETRIC KEY | | A PUBLIC KEY FOR A USER | |
| 1 | 6 | 1 | 9 | 1 | 9 | 1 | 9 | 1 | 9 |
| 2 | 4 | 2 | 7 | 2 | 0 | 2 | 3 | 2 | 0 |
| 3 | 2 | 3 | 5 | 3 | 4 | 3 | 4 | 3 | 4 |
| 4 | 3 | 4 | 8 | 4 | 5 | 4 | 6 | 4 | 5 |
| 5 | 9 | 5 | 1 | 5 | 6 | 5 | 7 | 5 | 6 |
| 6 | 0 | 6 | 6 | 6 | 2 | 6 | 0 | 6 | 2 |
| 7 | 1 | 7 | 2 | 7 | 3 | 7 | 1 | 7 | 3 |
| 8 | 7 | 8 | 3 | 8 | 7 | 8 | 2 | 8 | 7 |
| 9 | 8 | 9 | 0 | 9 | 8 | 9 | 5 | 9 | 8 |
| 0 | 5 | 0 | 4 | 0 | 1 | 0 | 8 | 0 | 1 |

USER B

FIG.13

**CENTER OF CERTIFICATION**

1. CHECKING AUTHORIZATION OF A AND B FOR ESTABLISHING SECURE COMMUNICATION
2. GENERATING A PUBLIC KEY FOR USER A
3. GENERATING A PUBLIC KEY FOR USER B
4. DELIVERING PUBLIC KEYS TO USERS A AND B FOR ESTABLISHING SYMMETRIC SECURE COMMUNICATION
5. DELIVERING NEW PUBLIC KEYS FOR TRANSFERRING A COMMUNICATION SYSTEM TO THE ASYMMETRIC MODE UPON TERMINATION OF THE COMMUNICATION SESSION

REQUEST FOR THE PUBLIC KEY DELIVERY FOR COMMUNICATION WITH USER B

REQUEST FOR THE PUBLIC KEY DELIVERY FOR COMMUNICATION WITH USER A

THE PUBLIC KEY DELIVERY

THE PUBLIC KEY DELIVERY

**USER A**

1. RECEIVING A PUBLIC KEY-PERMUTATION
2. MODIFYING THE EXTERNAL KEY TABLE FOR IMPLEMENTING SYMMETRIC SECURE COMMUNICATION
3. GENERATING STOCHASTIC PERMUTATION OF A MULTI-ALPHABET ENCODER
4. GENERATING STOCHASTIC PERMUTATION OF THE GAMMA GENERATING TABLE
5. TRANSMITTING THE GENERATED PUBLIC KEYS-PERMUTATIONS OF REGISTERS OF THE MULTI-ALPHABET ENCODER AND GAMMA

AGREEMENT TO ESTABLISH COMMUNICATION

TRANSMISSION OF THE ADDITIONAL PUBLIC KEY

ENTERING THE DATA TRANSMISSION SECURE MODE

**USER B**

1. RECEIVING A PUBLIC KEY-PERMUTATION
2. MODIFYING THE EXTERNAL KEY TABLE FOR IMPLEMENTING SYMMETRIC SECURE COMMUNICATION
3. GENERATING STOCHASTIC PERMUTATION OF A MULTI-ALPHABET ENCODER
4. GENERATING STOCHASTIC PERMUTATION OF THE GAMMA GENERATING TABLE
5. TRANSMITTING THE GENERATED PUBLIC KEYS-PERMUTATIONS OF REGISTERS OF THE MULTI-ALPHABET ENCODER AND GAMMA

FIG.14

43

## INTERNATIONAL SEARCH REPORT

| International application No. |
|---|
| **RU01/00272** |

| A. | CLASSIFICATION OF SUBJECT MATTER |
|---|---|

H04L 9/32, G06F 12/14

According to International Patent Classification (IPC) or to both national classification and IPC 7

| B. | FIELDS SEARCHED |
|---|---|

Minimum documentation searched (classification system followed by classification symbols) 7

G06F 12/00, 12/14, H04K 1/00, H04L 9/00, 9/32, 12/02, 12/22, 29/00, 29/02, 29/06, H04N 7/00, 7/18, H03M 7/00, 7/30

Documentation searched other than minimum documentation to the extent that such documents are included in the fields searched

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | RU 2137185 C1 (NASYPNY VLADIMIR VLADIMIROVICH) 10.09.1999 | 1-28 |
| A | RU 2144269 C1 (SERTKO, LLS) 10.09.2000 | 1-28 |
| A | WO 00/01108 A2 (PRIVADA, INC.) 6 January 2000 (06.01.2000) | 1-26 |
| A | RU 95102477 A1 (RIKOKH COMPANY, LTD.) 27.12.1996 | 26-27 |
| A | RU 99104428 A (NASYPNY VLADIMIR VLADIMIROVICH et al) 27.01.2001 | 28 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **19 Feburary 2002 (19 Feb 2002)** | **07 March 2002 (07. 03. 2002)** |

| Name and mailing address of the ISA/ | Authorized officer |
|---|---|
| | |
| Facsimile No. | Telephone No. |

Form PCT/ISA/210 (second sheet) (July 1992)